# EUROPEAN PATENT APPLICATION

(11) **EP 3 718 414 A1**
(43) Date of publication of application: **07.10.2020**
(21) Application number: 18883959.1
(22) Date of filing: 30.11.2018
(51) Int. Cl.: A23L 5/00, A23L 2/00, A23L 2/52, A23L 2/56, A23L 2/58, A23L 2/62, A23L 29/00, A23L 29/10, A23L 33/10, A23L 33/115, A23L 33/16, B01F 17/56

(54) **EMULSION COMPOSITION**

(30) Priority: 01.12.2017 JP 2017232127; 01.12.2017 JP 2017232130
(71) Applicant: San-Ei Gen F.F.I., INC., Toyonaka-shi, Osaka 561-8588 (JP)
(72) Inventor: MIUCHI, Takeshi, Toyonaka-shi Osaka 561-8588 (JP); KINOSHITA, Keigo, Toyonaka-shi Osaka 561-8588 (JP); SAKATA, Makoto, Toyonaka-shi Osaka 561-8588 (JP)
(74) Representative: Vossius & Partner Patentanwälte Rechtsanwälte mbB
(86) International application number: PCT/JP2018/044328
(87) International publication number: WO 2019/107574

(57) **Abstract**

An object of the present invention is to provide an emulsion composition having excellent stability. The above object can be achieved by an emulsion composition comprising water, an oily component, gum ghatti, and a salt of an element belonging to group 1 or 2 of the periodic table.

## Description

### Technical Field

The present invention relates to an emulsion composition.

### Background Art

Gum ghatti can be used as an excellent emulsifier. For example, PTL 1 suggests an emulsion composition prepared using gum ghatti.

However, there is still demand for the development of much better emulsifiers.

In the field of chemistry, including the technical field to which the present invention pertains, salts such as sodium chloride are generally used as emulsion breakers.

As can be understood from this, when it is required, for example, to maintain emulsified state and improve emulsifiability, the use of metal salts, such as sodium chloride, is generally avoided, even though they are necessary for other purposes.

Consistent with such common technical knowledge, PTL 2 suggests a technique for improving emulsifiability by demetallization (dechlorination).

### Citation List

### Patent Literature

PTL 1: WO2013/084518
PTL 2: JP2007-289124A

### Summary of Invention

### Technical Problem

An object of the present invention is to provide an emulsion composition having excellent stability.

### Solution to Problem

The present inventors conducted extensive research and consequently found that the above object can be achieved by an emulsion composition comprising water, an oily component, gum ghatti, and a salt of an element belonging to group 1 or 2 of the periodic table. The present invention has thus been completed.

The present invention includes the following subject matter.

Item 1. An emulsion composition comprising:
   water,
   an oily component,
   gum ghatti, and
   a salt of an element belonging to group 1 or 2 of the periodic table.
Item 2. The emulsion composition according to Item 1, wherein the oily component content is in the range of 0.1 to 50 mass%.
Item 3. The emulsion composition according to Item 1 or 2, wherein the gum ghatti content is in the range of 0.1 to 40 mass%.
Item 4. The emulsion composition according to any one of Items 1 to 3, wherein the gum ghatti content is in the range of 1 to 40000 parts by mass per 100 parts by mass of the oily component.
Item 5. The emulsion composition according to any one of Items 1 to 4, wherein the salt is at least one member selected from the group consisting of sodium chloride, potassium chloride, calcium lactate, calcium chloride, and magnesium chloride.
Item 6. The emulsion composition according to any one of Items 1 to 5, wherein the salt content is 0.01 parts by mass or more.
Item 7. The emulsion composition according to any one of Items 1 to 6, further comprising a polyhydric alcohol.
Item 8. The emulsion composition according to Item 7, wherein the polyhydric alcohol is at least one member selected from the group consisting of propylene glycol and glycerin.
Item 9. The emulsion composition according to any one of Items 1 to 8, wherein the gum ghatti is low-molecular weight gum ghatti having a weight average molecular weight of 0.020 x 10⁶ to 1.10 x 10⁶.
Item 10. A fine particle composition comprising:
   an oily component,
   gum ghatti, and
   a salt of an element belonging to group 1 or 2 of the periodic table;
   an internal phase containing the oily component being arranged in an external phase containing the gum ghatti and the salt of the element belonging to group 1 or 2 of the periodic table.
Item 11. A method for producing the fine particle composition according to Item 10, the method comprising drying the emulsion composition according to any one of Items 1 to 9.
Item 12. An emulsified flavoring preparation, emulsified colorant preparation, emulsified nutrition fortifier preparation, emulsified functional material preparation, or clouding agent comprising the emulsion composition according to any one of Items 1 to 9 or the fine particle composition according to Item 10.
Item 13. A food or drink comprising the emulsion composition according to any one of Items 1 to 9 or the fine particle composition according to Item 10.
Item 14. An aqueous composition comprising the emulsion composition according to any one of Items 1 to 9 or the fine particle composition according to Item 10.
Item 15. A method for enhancing the opacity of a drink, the method comprising adding the emulsion composition according to any one of Items 1 to 9 or the fine particle composition according to Item 10 to the drink.
Item 16. A method for improving the emulsion stability of an emulsion composition comprising water, an oily component, and gum ghatti, the method comprising adding a salt of an element belonging to group 1 or 2 of the periodic table to the composition.
Item 17. The method according to Item 16, wherein the gum ghatti is low-molecular weight gum ghatti having a weight average molecular weight of 0.020 x 10⁶ to 1.10 x 10⁶.

### Advantageous Effects of Invention

The present invention provides an emulsion composition having high stability (in particular, emulsion stability).

### Brief Description of Drawing

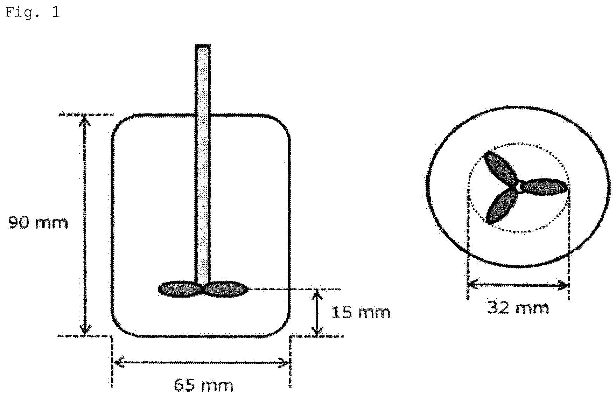

Fig. 1: A schematic diagram showing a test for evaluating emulsion physical stability (accelerated test). The figure on the left is a lateral view and the figure on the right is an upper view of the test system.

### Description of Embodiments

The present invention relates to an emulsion composition. Hereinafter, embodiments of the present invention are described in detail.

In the present specification, the terms "comprise" and "contain" are intended to include the meanings of the term "consist essentially of" and the term "consist of."

### [1] Emulsion composition

The emulsion composition of the present invention comprises:
water,
an oily component,
gum ghatti, and
a salt of an element belonging to group 1 or 2 of the periodic table.

The emulsion composition of the present invention may preferably be an emulsified preparation.

The emulsion composition of the present invention can be applied to various applications depending on, for example, the type of active ingredient of the oily component.

For example, the emulsion composition of the present invention can be applied as follows:
(a) when the active ingredient is a flavoring, the emulsion composition can be applied as an emulsified flavoring preparation;
(b) when the active ingredient is a colorant, the emulsion composition can be applied as an emulsified colorant preparation;
(c) when the active ingredient is a nutritional component (e.g., an oil-soluble vitamin or an oil-soluble amino acid), the emulsion composition can be applied as an emulsified nutrition fortifier preparation (a food additive used for the supplementation and enhancement of nutritional components) (e.g., an emulsified vitamin preparation or an emulsified amino acid preparation); and
(d) when the active ingredient is a functional material (e.g., a functional lipid (e.g., DHA or EPA), curcumin, astaxanthin, or lutein), the emulsion composition can be applied as an emulsified functional material preparation.

Further, the emulsion composition of the present invention can be applied as:
(e) a clouding agent (also known as a turbidity agent or a cloudifier) for imparting appropriate cloudiness to aqueous media, such as drinks.

The emulsion composition of the present invention may be suitably an oil-in-water emulsion composition.

More descriptively, the emulsion composition of the present invention may suitably contain an aqueous phase that is a continuous phase containing water as a medium, and an oil phase, in a particle form, containing an oil-soluble material and/or an oil-based medium (which may be referred to as "oil-containing particles" in the present specification).

### (1) Water

Examples of water used in the present invention include pure water, ion-exchanged water, and tap water.

### (2) Oily component

The oily component (i.e., the component that forms an oil phase) used in the present invention comprises at least one member selected from the group consisting of oil-soluble materials (including liposoluble materials) and oil-based media.

### (2-1) Oil-soluble material

Examples of the oil-soluble material used in the present invention include active ingredients, such as oil-soluble flavorings, oil-soluble colorants, oil-soluble physiologically active substances, and the like.

### (2-1-1) Oil-soluble flavoring

The oil-soluble flavoring (including liposoluble flavorings) usable in the present invention is not limited as long as the oil-soluble flavoring is an oil-soluble or liposoluble substance containing an aroma component.

The oil-soluble flavoring used in the present invention is preferably an edible flavoring that can be added to food or drink, or a flavoring that is applicable to a human body as a cosmetic or fragrance.

Examples of flavorings include extracts obtained by, for example, extraction with a non-volatile solvent, extraction with a volatile solvent, supercritical extraction, or a combination thereof, from a natural ingredient derived from an animal or plant;
natural flavorings, such as essential oils and recovery essences, obtained by a technique such as steam distillation or a press method;
synthetic flavorings synthesized by a chemical technique; and flavoring bases obtained by adding and/or dissolving these flavorings in a fat, an oil, and/or a solvent.

Examples of natural flavorings include extracts, such as absolutes, essences, and oleoresins;
squeezed liquid obtained by cold pressing or the like; and alcohol extracts or extracts obtained using a mixture of water and an alcohol ("tinctures" as such extracts).

Specific examples of the flavorings include citrus essential oils, such as orange oil, lemon oil, grapefruit oil, lime oil, and mandarin oil;
flower oils (or absolutes), such as lavender oil; essential oils, such as peppermint oil, spearmint oil, and cinnamon oil; essential oils (or oleoresins) of spice, such as allspice, anise seed, basil, laurel, cardamom, celery, clove, garlic, ginger, mustard, onion, paprika, parsley, and black pepper;
synthetic flavorings, such as limonene, linalool, geraniol, menthol, eugenol, and vanillin;
extract oils derived from beans, such as coffee, cacao, vanilla, and roasted peanuts; essence derived from tea, such as black tea, green tea, and oolong tea; and
synthetic flavoring compounds.

These flavorings can be used individually, but are typically used as a blended flavoring prepared by combining any two or more flavorings.

The term "flavoring" as used herein is defined as including not only flavorings composed of a single compound but also blended flavorings described above.

### (2-1-2) Oil-soluble colorant

The oil-soluble colorant (including liposoluble colorants) usable in the present invention is not limited as long as the oil-soluble colorant is an oil-soluble or liposoluble substance containing a coloring component.

The oil-soluble colorant usable in the present invention is preferably an edible colorant that can be added to food or drink, or a colorant that is applicable to a human body as a cosmetic or fragrance.

Examples of oil-soluble colorants include paprika pigment, red pepper pigment, turmeric pigment, annatto pigment, tomato pigment, marigold pigment, *Haematococcus* algae pigment, *Dunaliella* carotene, carrot carotene, palm oil carotene, β-carotene, astaxanthin, canthaxanthin, cryptoxanthin, curcumin, lycopene, lutein, apocarotenal, fucoxanthin, cryptoxanthin, zeaxanthin, capsanthin, capsorubin, norbixin, bixin, chlorophyll, and the like.

These oil-soluble colorants may be used singly or in a combination of two or more.

### (2-1-3) Oil-soluble physiologically active substance

The oil-soluble physiologically active substance (including liposoluble physiologically active substances) usable in the present invention is not limited as long as the oil-soluble physiologically active substance is an oil-soluble or liposoluble substance that is useful in a living organism.

As will be understood from the above description, an emulsion composition containing the oil-soluble physiologically active substance can be used as, for example, a medicinal agent, a nutrition fortifier (e.g., a vitamin preparation or an amino acid preparation), or a functional material preparation.

The oil-soluble physiologically active substance usable in the present invention is preferably an edible substance that can be added to food or drink, or a substance that is applicable to a human body as a cosmetic or fragrance.

Examples of oil-soluble physiologically active substances include oil-soluble medicinal agents;
liposoluble vitamins, such as liver oil, vitamin A (e.g., retinol), vitamin A oil, vitamin D (e.g., ergocalciferol and cholecalciferol), vitamin B2 butyric acid ester, ascorbic acid fatty acid ester, vitamin E (e.g., tocopherol, tocotrienol, and tocopherol acetate), and vitamin K (e.g., phylloquinone and menaquinone) ;
plant essential oils, such as limonene, linalool, nerol, citronellol, geraniol, citral, 1-menthol, eugenol, cinnamic aldehyde, anethole, perillaldehyde, vanillin, and γ-undeca lactone;
resveratrol, oil-soluble polyphenol, glucosylceramide, sesamin, phosphatidylserine, coenzyme Q₁₀, ubiquinol, curcumin, astaxanthin, lutein, and α-lipoic acid;
Ω-3 fatty acids, such as α-linolenic acid, eicosapentaenoic acid, and docosahexaenoic acid;
Ω-6 fatty acids, such as linoleic acid and γ-linolenic acid; and functional materials, such as plant sterols and the like.

Preferable examples include liposoluble vitamins, coenzyme Q₁₀, α-lipoic acid, and Ω-3 fatty acids, such as α-linolenic acid, eicosapentaenoic acid, and docosahexaenoic acid.

These oil-soluble physiologically active substances may be used singly or in a combination of two or more.

### (2-2) Oil-based medium

The oil-based medium usable in the present invention may refer to a carrier that forms an oil phase. Examples thereof include oil-based solvents and additives for the oil phase (e.g., specific gravity-adjusting agents).

The oil-based solvent usable in the present invention may be a solvent that is suitably usable as a solvent for the oil-soluble material, specifically a solvent that is compatible with the oil-soluble material.

The oil-based medium usable in the present invention is preferably an edible substance that can be added to food or drink, or a substance that is applicable to a human body as a cosmetic or fragrance.

Examples of oil-based media usable in the present invention include vegetable oils and fats, such as rapeseed oil, corn oil, palm oil, soybean oil, olive oil, jojoba oil, coconut oil, elemi resin, and mastic resin;
animal oils and fats, such as beef tallow and lard; and other oil-based media, such as sucrose acetate isobutyrate (SAIB), rosin, dammar resin, ester gum, glycerin fatty acid esters, and medium-chain triglycerides (MCTs) (medium-chain fatty acid oils).

These solvents may be used singly or in a combination of two or more.

The oil-based medium usable in the present invention is preferably at least one member selected from the group consisting of glycerin fatty acid esters, triglycerides, sucrose acetate isobutyrate, and vegetable oils and fats; and more preferably at least one member selected from the group consisting of glycerin fatty acid esters and triglycerides (more preferably medium-chain triglycerides).

Medium-chain triglycerides (MCTs) refer to triacylglycerols composed of medium-chain fatty acids having about 6 to 12 carbon atoms, preferably 6 to 10 carbon atoms, and more preferably 8 to 10 carbon atoms. Commercially available medium-chain triglycerides (MCTs) can be used without any restriction.

Specific examples of medium-chain triglycerides (MCTs) include caprylic triglyceride, capric triglyceride, caprylic and capric triglyceride, and mixtures of these triglycerides.

The lower limit of the oily component content in the emulsion composition of the present invention may be, for example, 0.1 mass%, preferably 0.5 mass%, and more preferably 1 mass%.

The upper limit of the oily component content may be, for example, 50 mass% or less, preferably 45 mass% or less, more preferably 40 mass% or less, and even more preferably 35 mass% or less.

The oily component content in the emulsion composition of the present invention is preferably in the range of 0.1 to 100 parts by mass, more preferably 0.15 to 90 parts by mass, even more preferably 0.2 to 80 parts by mass, and particularly preferably 0.3 to 70 parts by mass, per 100 parts by mass of the aqueous solvent.

The aqueous solvent contains water, a polyhydric alcohol, and ethanol.

### (3) Gum ghatti

In the present specification, the term "gum ghatti" refers to a polysaccharide derived from tree sap (succus) of *Anogeissus latifolia* Wallich, and is a water-soluble polysaccharide that typically dissolves in water at room temperature or higher to the degree of about 30 mass%.

The molecular weight of gum ghatti is typically in the range of 1.2 x 10⁶ to 2 x 10⁶.

In the present specification, the term "gum ghatti" also refers to such typical gum ghatti in a narrow sense.

In the present specification, gum ghatti having lower molecular weight than that of said typical gum ghatti (which may be referred to as "low-molecular weight gum ghatti" in the present specification) can be also preferably used.

In the present specification, whether the term "gum ghatti" is used in a broad sense (i.e., intended to also include the low-molecular weight gum ghatti) or in a narrow sense (i.e., intended to refer to one having the typical molecular weight) can be understood from common technical knowledge and the context of the specification of the present application.

Moreover, in order to distinguish from low-molecular weight gum ghatti, in the present specification, the typical gum ghatti may be referred to as "high-molecular weight gum ghatti" for convenience.

The molecular weight of the low-molecular weight gum ghatti is generally 0.020 x 10⁶ to 1.10 x 10⁶, preferably 0.020 x 10⁶ to 0.90 x 10⁶, more preferably 0.020 x 10⁶ to 0.60 x 10⁶, even more preferably 0.025 x 10⁶ to 0.50 x 10⁶, still even more preferably 0.030 x 10⁶ to 0.40 x 10⁶, particularly preferably 0.030 x 10⁶ to 0.30 x 10⁶, more particularly preferably 0.030 x 10⁶ to 0.35 x 10⁶, and even more particularly preferably 0.040 x 10⁶ to 0.30 x 10⁶.

In the present invention, the molecular weight of gum ghatti refers to weight average molecular weight.

That is, in the present specification, the expressions "high-molecular weight" and "low-molecular weight" for gum ghatti can be based on the weight average molecular weight.

The weight average molecular weight is measured by GPC analysis under the following conditions.
Detector: RI
Mobile phase: 100 mM K₂SO₄
Flow rate: 1.0 ml/min
Temperature: 40°C
Column: TSKgel GMPWXL 30 cm (Guard PWXL)
Injection: 100 µl
Pullulan standard: Shodex STANDARD P-82

Among the types of gum ghatti usable in the present invention, high-molecular weight gum ghatti preferably has the above molecular weight (i.e., molecular weight within the range of 1.2 x 10⁶ to 2 x 10⁶), and is water-soluble.
"Water-soluble" herein means the property that a sample is completely or substantially completely dissolved in a large excess of water.
"Water" herein means any type of water, e.g., pure water, ion-exchanged water, or ion-containing water. The water temperature may be any suitable temperature as long as the gum ghatti is soluble.

More specifically, by appropriately setting the type or the temperature of water, any gum ghatti dissolvable in water may suitably be used in the present invention.

The gum ghatti used in the present invention is preferably gum ghatti that has the above molecular weight and is completely or substantially dissolved in water in an amount that is three or more times the mass of the gum ghatti at room temperature (here, specifically 25°C).

The molecular weight distribution (ratio of weight average molecular weight to number average molecular weight) (Mw/Mn) of the low-molecular weight gum ghatti used in the present invention is preferably 1.1 to 13, more preferably 1.1 to 10, even more preferably 1.1 to 8, still even more preferably 1.1 to 6, and particularly preferably 1.1 to 4.

The molecular weight distribution of the gum ghatti used in the present invention is also measured by GPC analysis under the above-described conditions.

The low-molecular weight gum ghatti may be the low-molecular weight gum ghatti disclosed in the specification of International Application PCT/JP2017/035739 (WO/2018/062554).

### [2] Method for producing low-molecular weight gum ghatti

The low-molecular weight gum ghatti used in the present invention, but is not particularly limited to, can be produced by, for example, the production method described below or a similar method.

The method for producing low-molecular weight gum ghatti used in the present invention comprises subjecting gum ghatti, which is a raw material, to a molecular weight reduction treatment.

Gum ghatti usable as a raw material includes commercially available gum ghatti.

Examples of commercially available gum ghatti products include Gum Ghatti SD (San-Ei Gen F.F.I., Inc.).

As described above, gum ghatti distributed in the market typically has a weight average molecular weight of 1.2 x 10⁶ to 2 x 10⁶.

Gum ghatti for use as a raw material is not particularly limited as long as gum ghatti having a desired molecular weight can be produced; and gum ghatti for use as a raw material originally may partly contain low-molecular weight gum ghatti.

For example, gum ghatti as a raw material may contain gum ghatti molecular fractions having a weight average molecular weight exceeding 0.020 x 10⁶ (preferably a weight average molecular weight of more than 0.025 x 10⁶, more preferably more than 0.030 x 10⁶, and still more preferably more than 0.080 x 10⁶) .

The method of the molecular weight reduction treatment in this production method is not particularly limited, and preferable examples include molecular weight reduction treatment methods performed in the presence of water, such as at least one treatment selected from the group consisting of thermolysis, acidolysis, and enzymatic degradation.

Thermolysis can be performed by suitably selecting the conditions under which gum ghatti having a desired weight average molecular weight can be obtained on the basis of common technical knowledge.

Typically, the longer the treatment time, the lower the weight average molecular weight of the obtained gum ghatti.

Specifically, the treatment time for thermolysis is, for example, 0.01 to 8 hours. The treatment time can be suitably selected depending on the treatment temperature of thermolysis. For example, a shorter treatment time can be suitably selected for a higher treatment temperature.

Thermolysis can be suitably performed, for example, at a pH of 5 or less.

Examples of acids for use in acidolysis include citric acid (including anhydrous citric acid), phosphoric acid, phytic acid, malic acid, tartaric acid, hydrochloric acid, acetic acid, lactic acid, and ascorbic acid.

These acids may be used singly or in a combination of two or more.

Typically, the higher the treatment temperature, the lower the weight average molecular weight of the obtained gum ghatti.

The treatment temperature for acidolysis is, for example, 60 to 200°C, and preferably 80 to 200°C.

Typically, the longer the treatment time, the lower the weight average molecular weight of the obtained gum ghatti.

The treatment time for acidolysis is, for example, 0.01 to 8 hours.

Acidolysis can be suitably performed, for example, at a pH of 4 or less.

Examples of enzymes for use in enzymatic degradation include cellulase; mannanase; pectinase; sucrase; hemicellulase; Cellulosin AC40, Cellulosin HC100, Cellulosin TP25, and Cellulosin GM5 (all are trade names, HBI Enzymes Inc.); Sumizyme PX and Sumizyme AG2-L (both are trade names, Shin Nihon Chemical Co., Ltd.); Macerozyme A (trade name, Yakult Pharmaceutical Industry Co., Ltd.); and Macerating Enzyme Y (trade name, Yakult Pharmaceutical Industry Co., Ltd.).

These enzymes may be used singly or in a combination of two or more.

The conditions for the enzyme treatment (e.g., temperature, time, pH, and additives) can be suitably selected depending on the enzyme for use.

Among the types of gum ghatti usable in the present invention, low-molecular weight gum ghatti preferably has the above molecular weight, and is water-soluble.

A preferable embodiment of the gum ghatti (preferably high-molecular weight gum ghatti) used in the present invention includes gum ghatti in which the viscosity of an aqueous gum ghatti solution (Brix: 15°) measured according to the following conditions is 20 mPa·s or more.

The upper limit of the viscosity of the aqueous gum ghatti solution (Brix: 15°) is not particularly limited, and may be, for example, 2000 mPa·s.

### Conditions for measuring viscosity

1) 18 g of gum ghatti is added to 82 g of ion-exchanged water (20°C), and the mixture is stirred to prepare an aqueous gum ghatti solution.
2) The aqueous gum ghatti solution is allowed to stand (at 5°C for 18 hours), and the generated bubbles are removed.
3) Ion-exchanged water is appropriately added so that the Brix of the aqueous gum ghatti solution is 15°, thereby preparing a 15° Brix aqueous gum ghatti solution. This aqueous solution is used as a sample.
4) The viscosity of the sample is measured using a B-type viscometer (type BM; produced by TOKIMEC INC.) under the following conditions.

### Conditions

Rotor: No. 2
Rotation rate: 30 rpm
Rotation time: 1 minute

A preferable embodiment of the low-molecular weight gum ghatti used in the present invention includes low-molecular weight gum ghatti in which the viscosity of an aqueous low-molecular weight gum ghatti solution (Brix: 15°) measured according to the following conditions is 10 mPa·s or more.

The upper limit of the viscosity of the aqueous low-molecular weight gum ghatti solution (Brix: 15°) is not particularly limited, and may be, for example, 1000 mPa·s.

### Conditions for measuring viscosity

1) 18 g of low-molecular weight gum ghatti is added to 82 g of ion-exchanged water (20°C), and the mixture is stirred to prepare an aqueous low-molecular weight gum ghatti solution.
2) The aqueous low-molecular weight gum ghatti solution is allowed to stand (at 5°C for 18 hours), and the generated bubbles are removed.
3) Ion-exchanged water is appropriately added so that the Brix of the aqueous low-molecular weight gum ghatti solution is 15°, thereby preparing a 15° Brix aqueous low-molecular weight gum ghatti solution. This aqueous solution is used as a sample.
4) The viscosity of the sample is measured using a B-type viscometer (type BM; produced by TOKIMEC INC.) under the following conditions.

### Conditions

Rotor: No. 2
Rotation rate: 30 rpm
Rotation time: 1 minute

The gum ghatti content in the emulsion composition of the present invention may be preferably 0.1 to 40 mass%, more preferably 0.3 to 35 mass%, even more preferably 0.5 to 25 mass%, still even more preferably 0.6 to 20 mass%, particularly preferably 0.8 to 15 mass%, more particularly preferably 0.8 to 13 mass%, and most preferably 1 to 10 mass%.

The gum ghatti content per 100 parts by mass of the total amount of the oily component in the emulsion composition of the present invention may be preferably 1 part by mass or more, more preferably 2 parts by mass or more, even more preferably 3 parts by mass or more, still even more preferably 5 parts by mass or more, particularly preferably 8 parts by mass or more, and more particularly preferably 10 parts by mass or more.

The content may be preferably 40000 parts by mass or less, more preferably 10000 parts by mass or less, even more preferably 5000 parts by mass or less, still even more preferably 1000 parts by mass or less, particularly preferably 500 parts by mass or less, and more particularly preferably 300 parts by mass or less.

Further, the content may be 200 parts by mass or less, 150 parts by mass or less, or 100 parts by mass or less.

### (4) Salt

In the present invention, an emulsion composition with high emulsion stability can be provided by using, in combination, the gum ghatti described above and a salt of an element belonging to group 1 or 2 of the periodic table.

The salt may be an inorganic salt or an organic acid salt.

The salt may be preferably an inorganic salt.

Specific examples of the salt include sodium salts (e.g., sodium chloride), potassium salts (e.g., potassium chloride), calcium salts (e.g., calcium lactate and calcium chloride), magnesium salts (e.g., magnesium chloride), and the like.

Preferable examples of inorganic salts include sodium chloride, potassium chloride, calcium lactate, calcium chloride, and magnesium chloride.

More preferable examples of inorganic salts include sodium chloride, potassium chloride, and magnesium chloride.

Even more preferable examples of inorganic salts include sodium chloride.

These salts may be used singly or in a combination of two or more.

The emulsion composition of the present invention characteristically contains the salt described above.

The salt content may be preferably 0.01 mass% or more, more preferably 0.05 mass% or more, even more preferably 0.1 mass% or more, still even more preferably 0.5 mass% or more, particularly preferably 1 mass% or more, more particularly preferably 1.5 mass% or more, and most preferably 2 mass% or more.

The content may be preferably 9 mass% or less, more preferably 8 mass% or less, and even more preferably 7 mass% or less.

The salt content per 100 parts by mass of gum ghatti (preferably high-molecular weight gum ghatti) in the emulsion composition of the present invention may be preferably 0.01 parts by mass or more, more preferably 0.1 parts by mass or more, even more preferably 1 part by mass or more, still even more preferably 10 parts by mass or more, particularly preferably 20 parts by mass or more, more particularly preferably 30 parts by mass or more, and most preferably 40 parts by mass or more.

The content may be 9000 parts by mass or less, preferably 5000 parts by mass or less, more preferably 3000 parts by mass or less, even more preferably 2000 parts by mass or less, and particularly preferably 1500 parts by mass or less.

The salt content per 100 parts by mass of gum ghatti (preferably low-molecular weight gum ghatti) in the emulsion composition of the present invention may be preferably 0.01 parts by mass or more, more preferably 0.1 parts by mass or more, even more preferably 1 part by mass or more, still even more preferably 10 parts by mass or more, particularly preferably 15 parts by mass or more, more particularly preferably 20 parts by mass or more, and most preferably 30 parts by mass or more.

The content may be 9000 parts by mass or less, preferably 5000 parts by mass or less, more preferably 3000 parts by mass or less, even more preferably 2000 parts by mass or less, and particularly preferably 1500 parts by mass or less.

### (5) Polyhydric alcohol

The emulsion composition of the present invention may contain a polyhydric alcohol.

Use of a polyhydric alcohol improves the storage stability of an emulsion composition and enables an emulsion composition having a high antiseptic effect to be provided.

Examples of polyhydric alcohols usable in the present invention include glycerin, diglycerin, triglycerin, polyglycerin, propylene glycol, dipropylene glycol, 1,3-butylene glycol, ethylene glycol, polyethylene glycol, sorbitol (D-sorbitol), xylitol, maltitol, erythritol, mannitol, xylose, glucose, lactose, mannose, oligotose, high-fructose corn syrup, sucrose, and the like.

These polyhydric alcohols may be used singly or in a combination of two or more.

In the present invention, the polyhydric alcohol is preferably propylene glycol, glycerin, or a combination thereof.

The polyhydric alcohol content in the emulsion composition of the present invention may be, for example, 3 to 80 mass%, preferably 5 to 60 mass%, more preferably 6 to 50 mass%, and even more preferably 8 to 45 mass%.

When propylene glycol is used as a polyhydric alcohol, the propylene glycol content in the emulsion composition of the present invention may be, for example, 3 to 40 mass%, preferably 5 to 30 mass%, more preferably 8 to 25 mass%, and even more preferably 10 to 20 mass%.

When glycerin is used as a polyhydric alcohol, the glycerin content in the emulsion composition of the present invention may be, for example, 5 to 80 mass%, preferably 10 to 70 mass%, more preferably 15 to 60 mass%, even more preferably 20 to 55 mass%, and still even more preferably 25 to 50 mass%.

As described above, incorporating a polyhydric alcohol into an emulsion composition has advantages in that the storage stability of an emulsion composition can be improved and an emulsion composition having a high antiseptic effect can be provided.

However, use of a polyhydric alcohol may inconveniently cause a decrease in the emulsion stability of an emulsion composition.

Regarding this problem, in the present invention, an emulsion composition having high emulsion stability, even though it contains a polyhydric alcohol, can be provided by incorporating gum ghatti and the salt described above.

Synthetic preservatives, such as sodium benzoate and potassium sorbate, are generally used in conventional emulsion compositions from the viewpoint of an antiseptic effect.

However, these synthetic preservatives have the following problems:
(1) use thereof may adversely affect the flavor of an emulsion composition; and
(2) although they are effective against certain bacteria and/or fungi, there are bacteria and/or fungi that the preservatives are not effective against.

Further, due to recent health consciousness of consumers, use of synthetic preservatives tends to be avoided.

From this viewpoint, it is desirable that the emulsion composition of the present invention be substantially free of synthetic preservatives.

In these respects, the present invention can provide an emulsion composition having an excellent antiseptic effect and emulsion stability, even if use of synthetic preservatives is substantially suppressed, or synthetic preservatives are not used.

### (6) Properties of emulsion composition of present invention

### (6-1) pH

The emulsion composition of the present invention generally has a pH in the range of 2 to 6, preferably 2 to 4.5, more preferably 2 to 4, and even more preferably 2.5 to 3.5.

When the pH is in this range, an emulsion composition having more improved emulsion stability and high antiseptic properties can be provided.

To adjust the pH of the emulsion composition to the above range, an acid may be used as necessary.

The acid may be, for example, an organic acid, an inorganic acid, or a combination thereof.

Examples of acids include citric acid, phytic acid, ascorbic acid, phosphoric acid, lactic acid, adipic acid, gluconic acid, succinic acid, acetic acid, tartaric acid, fumaric acid, malic acid, pyrophosphoric acid, hydrochloric acid, and the like.

These acids may be used singly or in a combination of two or more.

The acid in the present invention is preferably at least one member selected from the group consisting of citric acid, phytic acid, ascorbic acid, phosphoric acid, and lactic acid.

The emulsion composition of the present invention may contain as one or more other optional components a water-soluble vitamin, a thickening stabilizer, an antioxidant, a chelating agent, an oxidation inhibitor, or the like as long as the effects of the present invention are not impaired.

The emulsion composition of the present invention may contain ethanol as long as the effects of the present invention are not impaired.

An emulsion composition having a high antiseptic effect can be provided by incorporating ethanol.

The ethanol content in the emulsion composition of the present invention may be, for example, 1 to 50 mass%, preferably 3 to 30 mass%, and more preferably 4 to 20 mass%.

### (6-2) Emulsion stability

The emulsion composition of the present invention has the advantage of excellent emulsion stability.

The term "emulsion stability" as used herein includes emulsifiability (ease of forming emulsified particles), emulsion storage stability (stability of emulsified particles during storage), and emulsion physical stability (stability of emulsified particles against external physical force).

Specifically, the emulsion composition of the present invention can exhibit high stability when it is evaluated based on the criteria described later in the Examples.

### (6-3) Form or shape

The form or shape of the emulsion composition of the present invention is not particularly limited.

For example, the emulsion composition of the present invention may be in a liquid form or may be in a powder form by a powderization means.

The particle diameter of emulsified particles of the emulsion composition of the present invention can be suitably adjusted depending on the intended use.

The emulsified particle diameter of the emulsion composition of the present invention (preferably emulsion composition containing high-molecular weight gum ghatti) is, in terms of median diameter (on a volume basis), preferably 1.8 µm or less, more preferably 1.5 µm or less, even more preferably 1.2 µm or less, still even more preferably 1.1 µm or less, particularly preferably 1.0 µm or less, and still even more preferably 0.9 µm or less.

The lower limit of the median diameter (on a volume basis) is not particularly limited, and is, for example, 0.08 µm, 0.1 µm or more, 0.12 µm or more, 0.15 µm or more, 0.2 µm or more, 0.25 µm or more, or 0.3 µm or more.

In the emulsion composition of the present invention (preferably emulsion composition containing high-molecular weight gum ghatti), the frequency of particles having a particle diameter of 1.3 µm or more (i.e., the proportion based on the number of all particles; this may be referred to as "1.3 µm↑" in the present specification) is preferably 70% or less, more preferably 50% or less, even more preferably 30% or less, still even more preferably 20% or less, particularly preferably 10% or less, more particularly preferably 7% or less, and most preferably 5% or less.

The lower limit of 1.3 µm↑ is not particularly limited, and is, for example, 0.1%, 0.5%, or 0.7%.

The emulsified particle diameter of the emulsion composition of the present invention (preferably emulsion composition containing low-molecular weight gum ghatti) is, in terms of median diameter (on a volume basis), preferably 1.2 µm or less, more preferably 1.1 µm or less, even more preferably 1 µm or less, still even more preferably 0.9 µm or less, particularly preferably 0.85 µm or less, more particularly preferably 0.8 µm or less, and most preferably 0.75 µm or less.

The lower limit of the median diameter (on a volume basis) is not particularly limited, and is, for example, 0.08 µm, 0.1 µm or more, 0.12 µm or more, 0.15 µm or more, 0.2 µm or more, or 0.3 µm or more.

In the emulsion composition of the present invention (preferably emulsion composition containing low-molecular weight gum ghatti), the frequency of particles having a particle diameter of 1.3 µm or more (i.e., the proportion based on the number of all particles; this may be referred to as "1.3 µm↑" in the present specification) is preferably 30% or less, more preferably 20% or less, even more preferably 15% or less, still even more preferably 10% or less, particularly preferably 7% or less, and more particularly preferably 5% or less.

The lower limit of 1.3 µm↑ is not particularly limited, and is, for example, 0.5%, 0.7%, or 0.9%.

### [3] Method for preparing emulsion composition

The emulsion composition of the present invention can be prepared by mixing
(1) an aqueous phase containing water, gum ghatti (including high-molecular weight gum ghatti and low-molecular weight gum ghatti), and the salt described above, and
(2) an oily component.

The means or method, and the conditions for mixing are not particularly limited as long as water, an oily component, gum ghatti, and the salt are mixed. Mixing itself may be an emulsification treatment, or mixing may be accompanied by an emulsification treatment.

The emulsification treatment may be performed with an emulsifying machine, such as a homogenizer (e.g., a high-pressure homogenizer, a homogenizing disperser, a homomixer, a Polytron stirrer, a colloid mill, and a Nanomizer). The conditions for the emulsification treatment can be suitably determined, depending on the type of emulsifying machine used.

For the emulsion composition of the present invention, it is desirable that an emulsification treatment be performed after mixing water, an oily component, gum ghatti, and the salt.

The method for preparing the emulsion composition according to the present invention includes the following preferable embodiment A:

### Preferable embodiment A

A method for preparing an emulsion composition containing water, an oily component, gum ghatti, and the salt, the method comprising:
(A1) preparing a mixture containing the water, the oily component, the gum ghatti, and the salt; and
(A2) subjecting the mixture to an emulsification treatment.

The method for preparing the emulsion composition according to the present invention also includes the following preferable embodiment B:

### Preferable embodiment B

A method for preparing an emulsion composition containing water, an oily component, gum ghatti, and the salt, the method comprising:
(step B1) preparing an aqueous phase containing the water, the gum ghatti, and the salt;
(step B2) preparing a mixture of the aqueous phase and the oily component; and
(step B3) subjecting the mixture to an emulsification treatment.

The emulsion composition of the present invention can be suitably prepared in a desired form using an appropriate method.

For example, when the emulsion composition of the present invention is formed into a powder form, a powderization means such as spray drying or freeze drying may be used.

### [4] Fine particle composition

The present invention also provides a fine particle composition comprising:
an oily component,
gum ghatti (including high-molecular weight gum ghatti and low-molecular weight gum ghatti), and
a salt of an element belonging to group 1 or 2 of the periodic table;
an internal phase containing the oily component being arranged in an external phase containing the gum ghatti and the salt of the element belonging to group 1 or 2 of the periodic table.

The fine particle composition may be obtained by removing water from the emulsion composition of the present invention described above.

As would be understood by a person skilled in the art from the above, the details of the fine particle composition can be understood based on the above description about the emulsion composition of the present invention and common technical knowledge.

The internal phase of the fine particle composition can be covered by the external phase. It is preferable that the internal phase be almost completely or completely covered by the external phase.

The fine particle composition can be produced by drying the emulsion composition of the present invention described above, for example, by a conventional method (e.g., freeze drying or spray drying).

### [5] Aqueous composition

The present invention also relates to an aqueous composition containing the emulsion composition.

The type of aqueous composition is not particularly limited, and may be, for example, a food or drink, a cosmetic or fragrance (including a cosmetic), a pharmaceutical, or a quasi-drug. The type of aqueous composition is preferably a food or drink, and more preferably a drink.

The amount of the emulsion composition of the present invention in the aqueous composition may vary depending on the type, use, etc., of the composition, and may be, for example, in the range of 0.001 to 5 mass% or 0.01 to 1 mass%.

### [5.1] Food or drink

The present invention also relates to a food or drink containing the emulsion composition.

The type of food or drink is not particularly limited. Specific examples of the food or drink include drinks, such as milk drinks, lactobacillus drinks, carbonated drinks, fruit-containing drinks (e.g., fruit-juice-containing drinks, fruit-juice-containing soft drinks, fruit-juice-containing carbonated drinks, and fruit-pulp-containing drinks), vegetable-containing drinks, vegetable- and fruit-containing drinks, alcoholic drinks such as liqueur, coffee drinks, powdered drinks, sport drinks, and supplement drinks;
tea drinks, such as black tea drinks, green tea drinks, and blended tea drinks (various drinks and tea drinks are included in "drinks");
desserts, such as, puddings such as custard pudding, milk pudding and fruit-juice-containing pudding, jellies, bavarois, and yogurt;
frozen desserts, such as milk ice cream, fruit-juice-containing ice cream, soft-serve ice cream, and popsicles;
gums, such as chewing gum and bubble gum (e.g., stick gum and sugar-coated gum granules);
chocolates, such as coated chocolates (e.g., marble chocolate) and flavored chocolates (e.g., strawberry chocolate, blueberry chocolate, and melon chocolate);
candies, such as hard candies (e.g., bonbons, butterballs, and marble), soft candies (e.g., caramel, nougat, gummy candies, and marshmallows), sugar-coated candies, drops, and taffy;
soups, such as consommé soup and potage soup; liquid seasonings, such as vinaigrette dressings, non-oil dressings, ketchup, gravy, and sauces;
jams, such as strawberry jam, blueberry jam, marmalade, apple jam, apricot jam, preserves, and syrups; fruit liquors, such as red wine;
processed fruits, such as candied cherries, apricots, apples, strawberries, and peaches; and
processed farm products, such as pickles.

The type of food or drink is particularly preferably a drink, a dessert (particularly preferably a jelly), a candy, a jam, pickles, or a liquid seasoning; and more preferably a drink.

The examples of the food or drink also include semifinished products, intermediate products, etc., of these products.

Oil-containing particles derived from the emulsion composition of the present invention are suitably present in the food or drink.

### [6] Method for improving emulsion stability of emulsion composition (emulsion stability improvement method)

The present invention also relates to the following method for improving the emulsion stability of an emulsion composition.

A method for improving the emulsion stability of an emulsion composition comprising:
water,
an oily component, and
gum ghatti (including high-molecular weight gum ghatti and low-molecular weight gum ghatti),
the method comprising adding the salt described above to the composition.

This method may be the same as or similar to the embodiments of the emulsion composition of the present invention and the preparation method described above, and can be understood by referring to the method for preparing the emulsion composition according to the present invention described above.

The method for improving the emulsion stability of an emulsion composition according to the present invention preferably includes an embodiment in which the step of incorporating the salt is performed before formation of emulsified particles.

The method for improving the emulsion stability of an emulsion composition according to the present invention includes the following preferable embodiment.

### Preferable embodiment

A method for improving the emulsion stability of an emulsion composition comprising the gum ghatti (including high-molecular weight gum ghatti and low-molecular weight gum ghatti), the method comprising:
1) preparing a mixture containing water, an oily component, the gum ghatti, and the salt; and
2) subjecting the mixture to an emulsification treatment to prepare an emulsion composition.

Specific examples of the preferable embodiment include the following examples:
A) in steps 1 and 2, the salt is added to a mixed composition containing the water, the oily component, and the gum ghatti, and an emulsification treatment is performed to prepare an emulsion composition;
B) in steps 1 and 2, the gum ghatti is added to a mixed composition containing the water, the oily component, and the salt, and an emulsification treatment is performed to prepare an emulsion composition;
C) in steps 1 and 2, the oily component is added to a mixed composition containing the water, the gum ghatti, and the salt, and an emulsification treatment is performed to prepare an emulsion composition; and
D) in steps 1 and 2, the water is added to a mixed composition containing the oily component, the gum ghatti, and the salt, and an emulsification treatment is performed to prepare an emulsion composition.

Although this is stated just to be sure, in these examples (in particular, example A and example B), each mixed composition described above may be subjected to the emulsification treatment. In this case, after addition of a further component, a further emulsification treatment may be performed, or a mere mixing treatment may be performed.

### Examples

The following describes the present invention with reference to Examples; however, the scope of the present invention is not limited to the Examples.

In the tables of the following Examples, numerals indicating formulations are mass% unless otherwise specified.

### Materials

The materials used in the Examples are described below. Gum ghatti (high-molecular weight gum ghatti): GATIFOLIA RD, hereinafter may be abbreviated as "Gum GH."
Low-molecular weight gum ghatti: prepared in the following manner; hereinafter may be abbreviated as "Gum GL."
Medium-chain triglyceride (MCT): Caprylic acid/capric acid = 3/2, produced by Nisshin OilliO Group, Ltd.

### Preparation of low-molecular weight gum ghatti

A 12 mass% aqueous solution of gum ghatti (GATIFOLIA RD (product name), San-Ei Gen F.F.I., Inc.) (citric acid: 0.2 mass%) was subjected to acidolysis under the conditions of 120°C, 2 atm (vapor pressure), and 0.5 hours to prepare low-molecular weight gum ghatti.

The molecular weight and molecular weight distribution were measured by GPC analysis under the following conditions.

As a result, the weight average molecular weight (Mw) was 0.13 x 10⁶, the number average molecular weight (Mn) was 0.05 x 10⁶, and the Mw/Mn was 2.7.

### - GPC analysis conditions

Detector: RI
Mobile phase: 100 mM K₂SO₄
Flow rate: 1.0 ml/min
Temperature: 40°C
Column: TSKgel GMPWXL 30 cm (Guard PWXL)
Injection: 100 µl
Pullulan standard: Shodex STANDARD P-82

Several types of low-molecular weight gum ghatti having different average molecular weights were prepared in the same manner, provided that the acidolysis conditions were adjusted.

Hereinafter, the "weight average molecular weight" may be simply referred to as "average molecular weight."

### Abbreviations

The following abbreviations may be used in the present specification.
Gum GH: gum ghatti (high-molecular weight gum ghatti)
Gum GL: low-molecular weight gum ghatti
SAIB: sucrose acetate isobutyrate
MCT: medium-chain fatty acid oil
NaCl: sodium chloride
V.E: tocopherol
β-carotene: β-carotene suspension

The following materials were used in the Examples. In the present specification, the weight average molecular weight may be simply referred to as "average molecular weight."
Gum ghatti (high-molecular weight gum ghatti) (Gum GH): GATIFOLIA RD (product name) (San-Ei Gen F.F.I., Inc.), average molecular weight: 1.2 million
Low-molecular weight gum ghatti (Gum GL): the low-molecular weight gum ghatti prepared above
Medium-chain fatty acid oil (MCT): Scholey 64G (product name) (Nisshin OilliO Group, Ltd.)
Sucrose acetate isobutyrate (SAIB): Eastman Sustane SAIB (product name) (Eastman Chemical)
Orange oil: ORANGE OIL 12010 (product name) (Citra Source)
V.E: DL-α-tocopherol (product name) (BASF)
β-carotene: a medium-chain triglyceride suspension of β-carotene (β-carotene content: 30%)
Aqueous Gum GH solution (abbreviated as "solution"): a 25 mass% aqueous gum ghatti solution (aqueous high-molecular weight gum ghatti solution)
Aqueous Gum GL solution: a 28 mass% aqueous low-molecular weight gum ghatti solution

The "aqueous solution" may be abbreviated as "solution."

### Production Example 1 (high-molecular weight gum ghatti-containing preparations)

### Production 1 of emulsified preparations

Emulsified preparations of Comparative Example 1-1 (Ref. 1-1) and Examples 1-1 to 1-7 (Ex. 1-1 to Ex. 1-7) were produced according to the formulations shown in Table 1-1 in the following manner.

The components of group 2 were stirred (2500 RPM, 3 minutes) and mixed.

The components of group 3 were added thereto, and the resulting mixture was stirred (2500 RPM, 1 minute) and mixed.

The components of group 1 heated to 100°C were added thereto, and the resulting mixture was stirred (2500 RPM, 3 minutes) and mixed.

The obtained solution was filtered (100 mesh) and then treated with a Nanomizer (50 MPa x 3 times).

The pH of the obtained emulsified preparations was within the range of 2.5 to 3.5.

**Table 1-1**

| | Unit: mass% | | | | | | | | |
|---|---|---|---|---|---|---|---|---|---|
| | | Ref. 1-1 | Ex. 1-1 | Ex. 1-2 | Ex. 1-3 | Ex. 1-4 | Ex. 1-5 | Ex. 1-6 | Ex. 1-7 |
| | NaCl | 0.00 | 0.10 | 0.25 | 0.50 | 1.00 | 2.00 | 3.00 | 4.50 |
| Group 1 | MCT | 10.47 | 10.47 | 10.47 | 10.47 | 10.47 | 10.47 | 10.47 | 10.47 |
| | SAIB | 9.39 | 9.39 | 9.39 | 9.39 | 9.39 | 9.39 | 9.39 | 9.39 |
| | Orange oil | 0.14 | 0.14 | 0.14 | 0.14 | 0.14 | 0.14 | 0.14 | 0.14 |
| Group 2 | Aqueous gum GH solution | 16.00 | 16.00 | 16.00 | 16.00 | 16.00 | 16.00 | 16.00 | 16.00 |
| | Refined salt (salt) | 0.00 | 0.10 | 0.25 | 0.50 | 1.00 | 2.00 | 3.00 | 4.50 |
| | Citric acid (anhydrous) | 0.50 | 0.50 | 0.50 | 0.50 | 0.50 | 0.50 | 0.50 | 0.50 |
| Group 3 | Water | 25.83 | 25.78 | 25.70 | 25.58 | 25.32 | 24.82 | 24.32 | 23.57 |
| | Glycerin | 37.67 | 37.62 | 37.55 | 37.42 | 37.18 | 36.68 | 36.18 | 35.43 |
| Total | | 100.00 | 100.00 | 100.00 | 100.00 | 100.00 | 100.00 | 100.00 | 100.00 |

### Test Example 1 (test of high-molecular weight gum ghatti-containing preparations)

The prepared emulsified preparations (emulsion compositions) were tested for the initial emulsifiability (emulsifiability at the start of storage), storage stability, and physical stability.

In these tests, the following method and conditions were used.

### Evaluation method

### (A) Method for evaluating emulsifiability and emulsion state

The emulsifiability and emulsion state were evaluated based on the particle diameter (median diameter (D50) and 1.3 µm↑) of emulsified particles.

### (A1) Particle diameter

### (A1a) Median diameter (D50)

The median diameter (D50) was measured using the following device, method, and conditions.

### - Device and method

Device: Particle-Size Distribution Analyzer Microtrac MT3000EX-II (MicrotracBEL Corp.)
Method and conditions: Refraction index = 1.81, measurement range = 0.021 to 2000 µm, volumetric basis

### (A1b) 1.3 µm↑

"1.3µm↑" is the frequency of particles having a particle diameter of 1.3 µm or more.

The numbers denote proportions based on the number of all particles (unit: %).

This was measured using the same device and method as those for the median diameter (D50) described above.

### (B) Turbidity [0.1%E (720 nm)] evaluation

The turbidity is turbidity of a 0.1% dilute aqueous solution of a sample (emulsified preparation) at 720 nm.

The preferable range of turbidity as a clouding agent is 0.2 or more.

The upper limit thereof is not particularly limited, and is, for example, 1, preferably 0.8.

### - Measurement method

"0.1%E (720 nm)" in "(2) Turbidity" above was found by using a 0.1% aqueous solution of each sample (emulsified preparation), which was obtained by diluting the sample with ion-exchanged water, and measuring the turbidity of the dilute solution at 720 nm under the following conditions.

### - Device

### Spectrophotometer: V-660DS spectrophotometer, produced by JASCO Corporation

### Test 1-1. Emulsifiability and storage stability of emulsified preparations (1) (changes over time during high-temperature short-time storage) (test of high-molecular weight gum ghatti-containing preparations)

The prepared emulsified preparations were each placed in a 30-mL glass bottle to fill and stored in a constant-temperature bath at 60°C.

The particle diameter (D50 and 1.3 µm↑) and turbidity (0.1%E) were evaluated at the start of storage, and 3 days, 7 days, and 14 days after storage to confirm emulsifiability at the start of storage, and the storage stability of the emulsified preparations.

Table 1-2 shows the results.

**Table 1-2**

| | | Initial | | | 60°C 3 days | | | 60°C 1 week | | | 60°C 2 weeks | | |
|---|---|---|---|---|---|---|---|---|---|---|---|---|---|
| | | D50 | 1.3 | 0.1%E | D50 | 1.3 | 0.1%E | D50 | 1.3 | 0.1%E | D50 | 1.3 | 0.1%E |
| | NaCl | | µm↑ | | | µm↑ | | | µm↑ | | | µm↑ | |
| | [wt%] | [µm] | [%] | [-] | [µm] | [%] | [-] | [µm] | [%] | [-] | [µm] | [%] | [-] |
| Ref.1-1 | 0.00 | 2.134 | 98.81 | 0.833 | 2.158 | 98.92 | 0.851 | 2.185 | 99.17 | 0.850 | 2.199 | 99.09 | 0.860 |
| Ex.1-1 | 0.10 | 1.694 | 88.93 | 0.760 | 1.734 | 90.10 | 0.779 | 1.733 | 90.01 | 0.783 | 1.755 | 90.52 | 0.798 |
| Ex.1-2 | 0.25 | 1.383 | 63.26 | 0.681 | 1.401 | 65.01 | 0.702 | 1.413 | 65.84 | 0.708 | 1.435 | 67.96 | 0.724 |
| Ex.1-3 | 0.50 | 1.132 | 35.88 | 0.610 | 1.155 | 39.57 | 0.626 | 1.162 | 39.15 | 0.639 | 1.179 | 41.04 | 0.652 |
| Ex.1-4 | 1.00 | 0.956 | 18.19 | 0.547 | 0.966 | 19.21 | 0.562 | 0.978 | 19.97 | 0.574 | 0.980 | 21.21 | 0.589 |
| Ex.1-5 | 2.00 | 0.721 | 4.66 | 0.438 | 0.730 | 4.96 | 0.454 | 0.730 | 5.19 | 0.470 | 0.737 | 5.58 | 0.472 |
| Ex.1-6 | 3.00 | 0.703 | 4.09 | 0.431 | 0.711 | 4.49 | 0.445 | 0.719 | 4.51 | 0.453 | 0.721 | 4.98 | 0.465 |
| Ex.1-7 | 4.50 | 0.589 | 1.59 | 0.355 | 0.605 | 1.62 | 0.369 | 0.607 | 1.69 | 0.371 | 0.609 | 1.94 | 0.383 |

### Test 1-2. Storage stability (2) (middle- and low-temperature storage) (test of high-molecular weight gum ghatti-containing preparations)

The prepared emulsified preparations were each placed in a 30-mL glass bottle to fill and stored at 40°C, 25°C, or 5°C.

The median diameter (D50), 1.3 µm↑, and turbidity were evaluated at the start of storage, and 1 month and 2.5 months after storage.

Table 1-3 shows the test results after 1 month, and Table 1-4 shows the test results after 2.5 months. The data at the start of storage is common to the data of Test 1-1.

**Table 1-3**

| | | Initial | | | 40°C 1 month | | | 25°C 1 month | | | 5°C 1 month | | |
|---|---|---|---|---|---|---|---|---|---|---|---|---|---|
| | | D50 | 1.3 | 0.1%E | D50 | 1.3 | 0.1%E | D50 | 1.3 | 0.1%E | D50 | 1.3 | 0.1%E |
| | NaCl | | µm↑ | | | µm↑ | | | µm↑ | | | µm↑ | |
| | [wt%] | [µm] | [%] | [-] | [µm] | [%] | [-] | [µm] | [%] | [-] | [µm] | [% ] | 0.1%E |
| Ref.1-1 | 0.00 | 2.134 | 98.81 | 0.833 | 2.191 | 98.95 | 0.862 | 2.137 | 99.06 | 0.851 | 2.146 | 98.90 | 0.830 |
| Ex.1-1 | 0.10 | 1.694 | 88.93 | 0.760 | 1.739 | 90.18 | 0.795 | 1.708 | 88.60 | 0.779 | 1.708 | 89.26 | 0.764 |
| Ex.1-2 | 0.25 | 1.383 | 63.26 | 0.681 | 1.401 | 64.75 | 0.723 | 1.399 | 64.55 | 0.698 | 1.391 | 63.58 | 0.689 |
| Ex.1-3 | 0.50 | 1.132 | 35.88 | 0.610 | 1.154 | 38.14 | 0.645 | 1.146 | 37.68 | 0.627 | 1.142 | 36.84 | 0.612 |
| Ex.1-4 | 1.00 | 0.956 | 18.19 | 0.547 | 0.966 | 19.65 | 0.583 | 0.964 | 19.21 | 0.564 | 0.957 | 18.91 | 0.554 |
| Ex.1-5 | 2.00 | 0.721 | 4.66 | 0.438 | 0.732 | 5.02 | 0.466 | 0.726 | 5.03 | 0.458 | 0.721 | 0.49 | 0.454 |
| Ex.1-6 | 3.00 | 0.703 | 4.09 | 0.431 | 0.713 | 4.29 | 0.456 | 0.710 | 4.45 | 0.452 | 0.705 | 4.18 | 0.438 |
| Ex.1-7 | 4.50 | 0.589 | 1.59 | 0.355 | 0.604 | 1.83 | 0.379 | 0.602 | 1.59 | 0.366 | 0.596 | 1.77 | 0.363 |

**Table 1-4**

| | | Initial | | | 40°C 2.5 months | | | 25°C 2.5 months | | | 5°C 2.5 months | | |
|---|---|---|---|---|---|---|---|---|---|---|---|---|---|
| | | D50 | 1.3 | 0.1%E | D50 | 1.3 | 0.1%E | D50 | 1.3 | 0.1%E | D50 | 1.3 | 0.1%E |
| | NaCl | | µm↑ | | | µm↑ | | | µm↑ | | | µm↑ | |
| | [wt%] | [µm] | [%] | [-] | [µm] | [%] | [-] | [µm] | [%] | [-] | [µm] | [%] | 0.1%E |
| Ref.1-1 | 0.00 | 2.134 | 98.81 | 0.833 | 2.222 | 99.50 | 0.823 | 2.191 | 99.12 | 0.834 | 2.139 | 98.85 | 0.840 |
| Ex.1-1 | 0.10 | 1.694 | 88.93 | 0.760 | 1.779 | 91.73 | 0.800 | 1.732 | 90.69 | 0.778 | 1.695 | 88.29 | 0.774 |
| Ex.1-2 | 0.25 | 1.383 | 63.26 | 0.681 | 1.424 | 67.78 | 0.717 | 1.420 | 67.05 | 0.697 | 1.407 | 65.70 | 0.697 |
| Ex.1-3 | 0.50 | 1.132 | 35.88 | 0.610 | 1.178 | 40.56 | 0.638 | 1.185 | 41.03 | 0.634 | 1.156 | 38.28 | 0.620 |
| Ex.1-4 | 1.00 | 0.956 | 18.19 | 0.547 | 0.983 | 20.88 | 0.578 | 0.98 | 20.45 | 0.573 | 0.971 | 19.87 | 0.558 |
| Ex.1-5 | 2.00 | 0.721 | 4.66 | 0.438 | 0.741 | 5.21 | 0.464 | 0.735 | 4.85 | 0.452 | 0.729 | 4.76 | 0.447 |
| Ex.1-6 | 3.00 | 0.703 | 4.09 | 0.431 | 0.723 | 4.56 | 0.455 | 0.717 | 4.70 | 0.445 | 0.708 | 4.59 | 0.441 |
| Ex.1-7 | 4.50 | 0.589 | 1.59 | 0.355 | 0.613 | 1.75 | 0.425 | 0.608 | 1.72 | 0.375 | 0.598 | 1.70 | 0.363 |

### 1-3. Physical load conditions of physical stability test of emulsified preparations (test of high-molecular weight gum ghatti-containing preparations)

In the physical stability test of the emulsified preparations, physical load conditions using a stirring blade were used.

The instruments and loading method are shown below. Further, Fig. 1 shows a schematic diagram of the instruments. Instruments: 200-mL beaker (glass beaker, diameter = 65 mm, height = 90 mm)

Stirring blade (a metal rod having a diameter of 5 mm with three blades having a diameter of 32 mm on the top end) Loading method:
1) 200 g of a sample (emulsified preparation) was weighed and placed in a 200-mL beaker.
2) The sample was allowed to stand at 60°C for 20 minutes.
3) A blade was placed in a portion 15 mm high from the bottom of the 200-mL beaker.
4) The sample was stirred with the stirring blade at a rotation rate of 1300 rpm.
5) The emulsified preparation was sampled for a predetermined time (0 minutes, 3 minutes, and 6 minutes), and a) median diameter (D50) and b) 1.3 µm↑ were evaluated.

Table 1-5 shows the results.

**Table 1-5**

| | | 0 min | | 3 min | | 6 min | |
|---|---|---|---|---|---|---|---|
| | | D50 | 1.3 | D50 | 1.3 | D50 | 1.3 |
| | NaCl | | µm↑ | | µm↑ | | µm↑ |
| | [wt%] | [µm] | [%] | [µm] | [%] | [µm] | [%] |
| Ref.1-1 | 0.00 | 2.691 | 100.00 | 4.291 | 100.00 | 4.674 | 100.00 |
| Ex.1-1 | 0.10 | 1.945 | 94.71 | 3.875 | 100.00 | 4.661 | 100.00 |
| Ex.1-2 | 0.25 | 1.650 | 83.29 | 3.619 | 100.00 | 3.890 | 100.00 |
| Ex.1-3 | 0.50 | 1.227 | 46.49 | 2.865 | 100.00 | 3.045 | 100.00 |
| Ex.1-4 | 1.00 | 0.978 | 21.80 | 1.967 | 97.39 | 2.108 | 98.65 |
| Ex.1-5 | 2.00 | 0.720 | 4.79 | 1.391 | 61.58 | 1.452 | 66.83 |
| Ex.1-6 | 3.00 | 0.708 | 4.46 | 0.817 | 13.41 | 0.874 | 18.38 |
| Ex.1-7 | 4.50 | 0.602 | 1.93 | 0.693 | 7.47 | 0.734 | 9.71 |

As can be understood from the above, it was confirmed that the addition of salt improved the emulsifiability, storage stability, and physical stability of the emulsified preparations.

### Production Example 2 (low-molecular weight gum ghatti-containing preparations)

### Production 2 of emulsified preparations

Emulsified preparations of Comparative Example 2-1 (Ref. 2-1) and Examples 2-1 to 2-7 (Ex. 2-1 to Ex. 2-7) were produced according to the formulations shown in Table 2-1 in the following manner. The low-molecular weight gum ghatti used had a molecular weight of 130000.

The components of group 2 were stirred (2500 RPM, 3 minutes) and mixed.

The components of group 3 were added thereto, and the resulting mixture was stirred (2500 RPM, 1 minute) and mixed.

The components of group 1 heated to 100°C were added thereto, and the resulting mixture was stirred (2500 RPM, 3 minutes) and mixed.

The obtained solution was filtered (100 mesh) and then treated with a Nanomizer (50 MPa x 3 times).

The pH of the obtained emulsified preparations was within the range of 2.5 to 3.5.

**Table 2-1**

| | Unit: mass% | | | | | | | | |
|---|---|---|---|---|---|---|---|---|---|
| | | Ref.2-1 | Ex.2-1 | Ex.2-2 | Ex. 2-3 | Ex.2-4 | Ex.2-5 | Ex.2-6 | Ex.2-7 |
| | NaCl | 0.00 | 0.10 | 0.25 | 0.50 | 1.00 | 2.00 | 3.00 | 4.50 |
| Group 1 | V.E | 0.20 | 0.20 | 0.20 | 0.20 | 0.20 | 0.20 | 0.20 | 0.20 |
| | MCT | 14.88 | 14.88 | 14.88 | 14.88 | 14.88 | 14.88 | 14.88 | 14.88 |
| | SAIB | 14.78 | 14.78 | 14.78 | 14.78 | 14.78 | 14.78 | 14.78 | 14.78 |
| | Orange oil | 0.14 | 0.14 | 0.14 | 0.14 | 0.14 | 0.14 | 0.14 | 0.14 |
| Group 2 | Aqueous gum GL solution | 31.25 | 31.25 | 31.25 | 31.25 | 31.25 | 31.25 | 31.25 | 31.25 |
| | Refined salt | 0.00 | 0.10 | 0.25 | 0.50 | 1.00 | 2.00 | 3.00 | 4.50 |
| | Citric acid (anhydrous) | 0.50 | 0.50 | 0.50 | 0.50 | 0.50 | 0.50 | 0.50 | 0.50 |
| Group 3 | Water | 4.84 | 4.79 | 4.72 | 4.61 | 4.39 | 3.42 | 2.97 | 2.30 |
| | Glycerin | 33.41 | 33.36 | 33.28 | 33.14 | 32.86 | 32.83 | 32.28 | 31.45 |
| Total | | 100.00 | 100.00 | 100.00 | 100.00 | 100.00 | 100.00 | 100.00 | 100.00 |

### Test Example 2 (test of low-molecular weight gum ghatti-containing preparations)

The prepared emulsified preparations (emulsion compositions) were tested for the initial emulsifiability, storage stability, and physical stability.

In these tests, the following method and conditions were used.

### Evaluation method

### (A) Method for evaluating emulsifiability and emulsion state

The emulsifiability and emulsion state were evaluated based on the particle diameter (median diameter (D50) and 1.3 µm↑) of emulsified particles.

### (A1) Particle diameter

### (A1a) Median diameter (D50)

The median diameter (D50) was measured using the following device, method, and conditions.

### - Device and method

Device: Particle-Size Distribution Analyzer Microtrac MT3000EX-II (MicrotracBEL Corp.)
Method and conditions: Refraction index = 1.81, measurement range = 0.021 to 2000 µm, volumetric basis

### (A1b) 1.3 µm↑

"1.3µm↑" means the frequency of particles having a particle diameter of 1.3 µm or more.

The numbers denote proportions based on the number of all particles (unit: %).

This was measured using the same device and method as those for the median diameter (D50) described above.

### (B) Turbidity [0.1%E (720 nm)] evaluation

The turbidity is turbidity of a 0.1% dilute aqueous solution of a sample (emulsified preparation) at 720 nm.

The preferable range of turbidity as a clouding agent is 0.2 or more.

The upper limit thereof is not particularly limited, and is, for example, 1, preferably 0.8.

### - Measurement method

"0.1%E (720 nm)" in "(2) Turbidity" above was found by using a 0.1% aqueous solution of each sample (emulsified preparation), which was obtained by diluting the sample with ion-exchanged water, and measuring the turbidity of the dilute solution at 720 nm under the following conditions.

### - Device

### Spectrophotometer: V-660DS spectrophotometer, produced by JASCO Corporation

### Test 2-1. Emulsifiability and storage stability of emulsified preparations (1) (changes over time during high-temperature short-time storage) (test of low-molecular weight gum ghatti-containing preparations)

The prepared emulsified preparations were each placed in a 30-mL glass bottle to fill and stored in a constant-temperature bath at 60°C.

The particle diameter (D50 and 1.3 µm↑) and turbidity (0.1%E) were evaluated at the start of storage, and 3 days, 7 days, and 14 days after storage to confirm the emulsifiability at the start of storage, and the storage stability of the emulsified preparations.

Table 2-2 shows the results.

**Table 2-2**

| | | Initial | | | 60°C 3 days | | | 60°C 1 week | | | 60°C 2 weeks | | |
|---|---|---|---|---|---|---|---|---|---|---|---|---|---|
| | | D50 | 1.3 | 0.1%E | D50 | 1.3 | 0.1%E | D50 | 1.3 | 0.1%E | D50 | 1.3 | 0.1%E |
| | NaCl | | µm↑ | | | µm↑ | | | µm↑ | | | µm↑ | |
| | [wt%] | [µm] | [%] | [-] | [µm] | | [-] | [µm] | [%] | [-] | [µm] | [%] | [-] |
| Ref.2-1 | 0.00 | 0.837 | 11.16 | 0.825 | 1.519 | 62.48 | 0.982 | 2.482 | 88.39 | 1.031 | 2.327 | 87.31 | 1.062 |
| Ex.2-1 | 0.10 | 0.819 | 11.95 | 0.816 | 1.825 | 70.88 | 0.969 | 2.383 | 86.21 | 1.014 | 2.09 | 82.56 | 1.055 |
| Ex.2-2 | 0.25 | 0.783 | 13.40 | 0.758 | 1.264 | 50.12 | 0.877 | 1.527 | 61.57 | 0.919 | 1.718 | 69.17 | 0.961 |
| Ex.2-3 | 0.50 | 0.668 | 6.38 | 0.642 | 0.811 | 24.19 | 0.715 | 0.97 | 36.09 | 0.753 | 1.047 | 40.11 | 0.789 |
| Ex.2-4 | 1.00 | 0.595 | 3.51 | 0.575 | 0.644 | 7.88 | 0.619 | 0.973 | 11.66 | 0.640 | 0.701 | 13.50 | 0.663 |
| Ex.2-5 | 2.00 | 0.538 | 2.90 | 0.516 | 0.557 | 2.92 | 0.544 | 0.566 | 4.07 | 0.564 | 0.586 | 5.42 | 0.574 |
| Ex.2-6 | 3.00 | 0.491 | 0.99 | 0.462 | 0.51 | 1.41 | 0.492 | 0.519 | 1.76 | 0.506 | 0.529 | 2.58 | 0.514 |
| Ex.2-7 | 4.50 | 0.488 | 1.23 | 0.462 | 0.494 | 1.37 | 0.473 | 0.501 | 1.61 | 0.488 | 0.511 | 1.85 | 0.494 |

### Test 2-2. Storage stability (2) (middle- and low-temperature storage) (test of low-molecular weight gum ghatti-containing preparations)

The prepared emulsified preparations were each placed in a 30-mL glass bottle to fill and stored at 40°C, 25°C, or 5°C.

The median diameter (D50), 1.3 µm↑, and turbidity were evaluated at the start of storage, and 1 month and 2.5 months after storage.

Table 2-3 shows the test results after 1 month, and Table 2-4 shows the test results after 2.5 months. The data at the start of storage is common to the data of Test 2-1.

**Table 2-3**

| | Initial | Initial | | | 40°C 1 month | | | 25°C 1 month | | | 5°C 1 month | | |
|---|---|---|---|---|---|---|---|---|---|---|---|---|---|
| | | D50 | 1.3 | 0.1%E | D50 | 1.3 | 0.1%E | D50 | 1.3 | 0.1%E | D50 | 1.3 | 0.1%E |
| | NaCl | | µm↑ | | | µm↑ | | | µm↑ | | | µm↑ | |
| | [wt%] | [µm] | [%] | [-] | [µm] | [%] | [-] | [µm] | [%] | [-] | [µm] | [%] | 0.1%E |
| Ref.2-1 | 0.00 | 0.837 | 11.16 | 0.825 | 0.961 | 29.56 | 0.895 | 0.87 | 16.30 | 0.861 | 0.852 | 12.25 | 0.835 |
| Ex.2-1 | 0.10 | 0.819 | 11.95 | 0.816 | 0.945 | 29.87 | 0.874 | 0.866 | 19.61 | 0.841 | 0.843 | 16.12 | 0.821 |
| Ex.2-2 | 0.25 | 0.783 | 13.40 | 0.758 | 0.943 | 21.63 | 0.813 | 0.799 | 16.40 | 0.784 | 0.779 | 13.02 | 0.769 |
| Ex.2-3 | 0.50 | 0.668 | 6.38 | 0.642 | 0.696 | 10.34 | 0.688 | 0.683 | 8.91 | 0.672 | 0.676 | 7.91 | 0.662 |
| Ex.2-4 | 1.00 | 0.595 | 3.51 | 0.575 | 0.617 | 4.27 | 0.615 | 0.610 | 4.93 | 0.601 | 0.606 | 4.09 | 0.587 |
| Ex.2-5 | 2.00 | 0.538 | 2.90 | 0.516 | 0.553 | 3.30 | 0.546 | 0.545 | 2.82 | 0.535 | 0.544 | 3.08 | 0.539 |
| Ex.2-6 | 3.00 | 0.491 | 0.99 | 0.462 | 0.516 | 1.71 | 0.499 | 0.503 | 1.35 | 0.486 | 0.499 | 1.21 | 0.486 |
| Ex.2-7 | 4.50 | 0.488 | 1.23 | 0.462 | 0.501 | 1.35 | 0.480 | 0.501 | 1.46 | 0.477 | 0.492 | 1.40 | 0.470 |

**Table 2-4**

| | | Initial | | | 40°C 2.5 months | | | 25°C 2.5 months | | | 5°C 2.5 months | | |
|---|---|---|---|---|---|---|---|---|---|---|---|---|---|
| | | D50 | 1.3 | 0.1%E | D50 | 1.3 | 0.1%E | D50 | 1.3 | 0.1%E | D50 | 1.3 | 0.1%E |
| | NaCl | | µm↑ | | | µm↑ | | | µm↑ | | | µm↑ | |
| | [wt%] | [µm] | [%] | [-] | [µm] | [%] | [-] | [µm] | [%] | [-] | [µm] | [%] | 0.1%E |
| Ref.2-1 | 0.00 | 0.837 | 11.16 | 0.825 | 0.951 | 27.61 | 0.886 | 0.863 | 16.04 | 0.849 | 0.84 | 12.62 | 0.830 |
| Ex.2-1 | 0.10 | 0.819 | 11.95 | 0.816 | 0.928 | 25.42 | 0.866 | 0.841 | 17.88 | 0.831 | 0.839 | 15.61 | 0.816 |
| Ex.2-2 | 0.25 | 0.783 | 13.40 | 0.758 | 0.845 | 18.63 | 0.810 | 0.791 | 14.73 | 0.773 | 0.785 | 14.27 | 0.759 |
| Ex.2-3 | 0.50 | 0.668 | 6.38 | 0.642 | 0.706 | 9.51 | 0.685 | 0.685 | 7.91 | 0.662 | 0.675 | 7.31 | 0.648 |
| Ex.2-4 | 1.00 | 0.595 | 3.51 | 0.575 | 0.625 | 5.16 | 0.614 | 0.613 | 4.03 | 0.593 | 0.608 | 3.65 | 0.581 |
| Ex.2-5 | 2.00 | 0.538 | 2.90 | 0.516 | 0.559 | 2.83 | 0.558 | 0.534 | 3.88 | 0.524 | 0.548 | 3.06 | 0.522 |
| Ex.2-6 | 3.00 | 0.491 | 0.99 | 0.462 | 0.519 | 1.64 | 0.499 | 0.508 | 1.29 | 0.478 | 0.501 | 1.32 | 0.472 |
| Ex.2-7 | 4.50 | 0.488 | 1.23 | 0.462 | 0.5C8 | 1.22 | 0.476 | 0.503 | 1.38 | 0.471 | 0.492 | 1.32 | 0.454 |

### 2-3. Physical load conditions of physical stability test of emulsified preparations (test of low-molecular weight gum ghatti-containing preparations)

In the physical stability test of the emulsified preparations, physical load conditions using a stirring blade were used.

The instruments and loading method are shown below. Further, Fig. 1 shows a schematic diagram of the instruments. Instruments: 200-mL beaker (glass beaker, diameter = 65 mm, height = 90 mm)

Stirring blade (a metal rod having a diameter of 5 mm with three blades having a diameter of 32 mm on the top end) Loading method:
1) 200 g of a sample (emulsified preparation) was weighed and placed in a 200-mL beaker.
2) The sample was allowed to stand at 60°C for 20 minutes.
3) A blade was placed in a portion 15 mm high from the bottom of the 200-mL beaker.
4) The sample was stirred with the stirring blade at a rotation rate of 1300 rpm.
5) The emulsified preparation was sampled for a predetermined time (0 minutes, 3 minutes, and 6 minutes), and a) median diameter (D50) and b) 1.3 µm↑ were evaluated.

Table 2-5 shows the results.

**Table 2-5**

| | | 0 min | | 3 min | | 6 min | |
|---|---|---|---|---|---|---|---|
| | | D50 | 1.3 | D50 | 1.3 | D50 | 1.3 |
| | NaCl | | µm↑ | | µm↑ | | µm↑ |
| | [wt%] | [µm] | [%] | [µm] | [%] | [µm] | [%] |
| Ref.2-1 | 0.00 | 1.584 | 63.65 | 1.925 | 90.60 | 1.836 | 89.09 |
| Ex.2-1 | 0.10 | 1.468 | 59.30 | 2.655 | 99.67 | 2.521 | 99.12 |
| Ex.2-2 | 0.25 | 1.322 | 52.36 | 2.065 | 92.42 | 2.036 | 91.73 |
| Ex.2-3 | 0.50 | 0.904 | 33.81 | 2.044 | 89.96 | 1.874 | 85.57 |
| Ex.2-4 | 1.00 | 0.660 | 12.84 | 1.652 | 68.78 | 1.508 | 63.52 |
| Ex.2-5 | 2.00 | 0.578 | 7.99 | 1.760 | 74.59 | 1.586 | 68.65 |
| Ex.2-6 | 3.00 | 0.521 | 3.18 | 1.355 | 54.40 | 1.228 | 48.37 |
| Ex.2-7 | 4.50 | 0.512 | 2.14 | 0.959 | 35.88 | 0.971 | 35.64 |

As can be understood from the above, it was confirmed that the addition of salt improved the emulsifiability, storage stability, and physical stability of the emulsified preparations.

### Production Example 3 (gum ghatti-containing preparations) (Presence of salt and variations of gum ghatti concentration and molecular weight)

### (3-1) GumG solution (Mw: 1.2 million, 25 mass% aqueous solution)

Emulsified preparations of Comparative Examples 3-1 to 3-5 (Ref. 3-1 to 3-5) and Examples 3-1 to 3-5 (Ex. 3-1 to Ex. 3-5) were produced according to the formulations shown in Table 3-1 (GumG solutions (Mw: 1.2 million)) in the following manner while changing the amount (concentration) of gum ghatti. Hereinafter, the unit for each numerical value of amount in the formulations is mass%, as in the above formulations.

The components of group 2 were stirred (2500 RPM, 3 minutes) and mixed.

The components of group 3 were added thereto, and the resulting mixture was stirred (2500 RPM, 1 minute) and mixed.

The components of group 1 heated to 100°C were added thereto, and the resulting mixture was stirred (2500 RPM, 3 minutes) and mixed.

The obtained solution was filtered (100 mesh) and then treated with a Nanomizer (50 MPa x 3 times).

The pH of the obtained emulsified preparations was within the range of 2.5 to 3.5.

### (3-2) GumG solution (Mw: 150000, 28 mass% aqueous solution)

Similarly, emulsified preparations of Comparative Examples 3-6 to 3-10 (Ref. 3-6 to 3-10) and Examples 3-6 to 3-10 (Ex. 3-6 to Ex. 3-10) were prepared according to the formulations shown in Table 3-2 (GumG solutions (Mw: 150000)).

### (3-3) GumG solution (Mw: 50000, 90000, and 250000, each 28 mass% aqueous solution)

Similarly, emulsified preparations of Comparative Examples 3-11 to 3-13 (Ref. 3-11 to 3-13) and Examples 3-11 to 3-13 (Ex. 3-11 to Ex. 3-13) were prepared according to the formulations shown in Table 3-3 (GumG solutions (Mw: 50000, 90000, and 250000)).

**Table 3-1**

| | | Ex.3-1 | Ex. 3-2 | Ex. 3-3 | Ex. 3-4 | Ex. 3-5 | Ref. 3-1 | Ref. 3-2 | Ref. 3-3 | Ref. 3-4 | Ref. 3-5 |
|---|---|---|---|---|---|---|---|---|---|---|---|
| Group 1 | MCT | 10.61 | 10.61 | 10.61 | 10.61 | 10.61 | 10.61 | 10.61 | 10.61 | 10.61 | 10.61 |
| | SAIB | 9.39 | 9.39 | 9.39 | 9.39 | 9. 39 | 9.39 | 9.39 | 9.39 | 9.39 | 9.39 |
| | GumG solution | 16.00 | 32.00 | 8.00 | 4.00 | 2.00 | 16.00 | 32.00 | 8.00 | 4.00 | 2.00 |
| Group 2 | Refined salt | 4.50 | 4.50 | 4.50 | 4.50 | 4.50 | 0.00 | 0.00 | 0.00 | 0.00 | 0.00 |
| | Citric acid (anhydrous) | 0.50 | 0.50 | 0.50 | 0.50 | 0.50 | 0.50 | 0.50 | 0.50 | 0.50 | 0.50 |
| Group 3 | Water | 23.57 | 9.57 | 30.57 | 34.07 | 35.82 | 25.83 | 11.82 | 32.83 | 36.33 | 38.08 |
| | Glycerin | 35.43 | 33.43 | 36.43 | 36.93 | 37.18 | 37.67 | 35.68 | 38.67 | 39.17 | 39.42 |
| Total | | 100.00 | 100.00 | 100.00 | 100.00 | 100.00 | 100.00 | 100.00 | 100.00 | 100.00 | 100.00 |

**Table 3-2**

| | | Ex. 3-6 | Ex. 3-7 | Ex. 3-8 | Ex. 3-9 | Ex. 3-10 | Ref. 3-6 | Ref. 3-7 | Ref. 3-8 | Ref. 3-9 | Ref. 3-10 |
|---|---|---|---|---|---|---|---|---|---|---|---|
| Group 1 | Vitamin E | 0.20 | 0.20 | 0.20 | 0.20 | 0.20 | 0.20 | 0.20 | 0.20 | 0.20 | 0.20 |
| | MCT | 14.78 | 14.78 | 14.78 | 14.78 | 14.78 | 15.02 | 15.02 | 15. 02 | 15.02 | 15.02 |
| | SAIB | 15.02 | 15.02 | 15.02 | 15.02 | 15.02 | 14.78 | 14.78 | 14.78 | 14.78 | 14.78 |
| Group 2 | GumG solution | 31.25 | 16.00 | 8.00 | 4.00 | 2.00 | 31.25 | 16.00 | 8.00 | 4.00 | 2.00 |
| | Refined salt | 4.50 | 4.50 | 4.50 | 4.50 | 4.50 | 0.00 | 0.00 | 0.00 | 0.00 | 0.00 |
| | Citric acid (anhydrous) | 0.50 | 0.50 | 0.50 | 0.50 | 0.50 | 0.50 | 0.50 | 0.50 | 0.50 | 0.50 |
| Group 3 | Water | 2.30 | 15.45 | 22.35 | 25.80 | 27.53 | 4.32 | 17.47 | 24.37 | 27.83 | 29.55 |
| | Glycerin | 31.45 | 33.55 | 34.65 | 35.20 | 35.48 | 33.93 | 36.03 | 37.13 | 37.67 | 37.95 |
| Total | | 100.00 | 100.00 | 100.00 | 100.00 | 100.01 | 100.00 | 100.00 | 100.00 | 100.00 | 100.00 |

**Table 3-3**

| | | Ex. 3-11 | Ex. 3-12 | Ex. 3-13 | Ref. 3-11 | Ref. 3-12 | Ref. 3-13 |
|---|---|---|---|---|---|---|---|
| Group 1 | Vitamin E | 0.20 | 0.20 | 0.20 | 0.20 | 0.20 | 0.20 |
| | MCT | 15.02 | 15.02 | 15.02 | 15.02 | 15.02 | 15.02 |
| | SAIB | 14.78 | 14.78 | 14.78 | 14.78 | 14.78 | 14.78 |
| Group 2 | GumG solution (Mw: 50000) | 31.25 | 0.00 | 0.00 | 31.25 | 0.00 | 0.00 |
| | GumG solution (Mw: 90000) | 0.00 | 31.25 | 0.00 | 0.00 | 31.25 | 0.00 |
| | GumG solution (Mw: 250000) | 0.00 | 0.00 | 31.25 | 0.00 | 0.00 | 31.25 |
| | Refined salt | 4.50 | 4.50 | 4.50 | 0.00 | 0.00 | 0.00 |
| | Citric acid (anhydrous) | 0.50 | 0.50 | 0.50 | 0.50 | 0.50 | 0.50 |
| Group 3 | Water | 2.30 | 2.30 | 2.30 | 4.32 | 4.32 | 4.32 |
| | Glycerin | 31.45 | 31.45 | 31.45 | 33.93 | 33.93 | 33.93 |
| Total | | 100.00 | 100.00 | 100.00 | 100.00 | 100.00 | 100.00 |

### Test Example 3 (gum ghatti-containing preparations)

### (Presence of salt and variations of gum ghatti concentration and molecular weight)

The various preparations produced in Production Example 3 were each tested for initial emulsifiability, storage stability, and physical stability according to the methods of Test Examples 1 and 2. The results are shown in each of the following tables.

### Emulsifiability and storage stability

**Table 3-4**

| | | Initial | | | 60°C 3 days | | | 60°C 1 week | | | 60°C 2 weeks | | |
|---|---|---|---|---|---|---|---|---|---|---|---|---|---|
| | NaCl | 050 | 1.3*µ*m↑ | 0.1%E | D50 | 1.3*µ*m↑ | 0.1%E | D50 | 1.3*µ*m↑ | 0.1%E | D50 | 1.3*µ*m↑ | 0.1%E |
| | [wt%] | [*µ*m] | [%] | [-] | [*µ*m] | [%] | [-] | [*µ*m] | [%] | [-] | [µm] | [%] | [-] |
| Ex. 3-1 | 4.50 | 0.586 | 1.64 | 0.361 | 0.599 | 1.82 | 0.374 | 0.600 | 1.87 | 0.377 | 0.606 | 1.88 | 0.387 |
| Ex.3-2 | 4.50 | 0.485 | 0.63 | 0.269 | 0.497 | 0.66 | 0.278 | 0.499 | 0.65 | 0.586 | 0.507 | 0.71 | 0.295 |
| Ex. 3-3 | 4.50 | 0.795 | 7.20 | 0.513 | 0.802 | 7.37 | 0.529 | 0.805 | 7.56 | 0.528 | 0.811 | 8.54 | 0.540 |
| Ex. 3-4 | 4.50 | 1.117 | 34.49 | 0.660 | 1.110 | 34.03 | 0.681 | 1.128 | 35.79 | 0.679 | 1.160 | 40.00 | 0.689 |
| Ex. 3-5 | 4.50 | 1.673 | 84.92 | 0.791 | 1.726 | 85.45 | 0.800 | 1.792 | 85.57 | 0.778 | 1.944 | 85.54 | 0.705 |
| Ref 3-1 | 0.00 | 1.914 | 96.12 | 0.795 | 1.941 | 96.25 | 0.811 | 1.953 | 96.27 | 0.829 | 2.002 | 96.65 | 0.832 |
| Ref. 3-2 | 0.00 | 1.868 | 96.68 | 0.753 | 1.867 | 95.97 | 0.771 | 1.869 | 95.92 | 0.801 | 1.884 | 36.44 | 0.815 |
| Ref. 3-3 | 0.00 | 2.648 | 100.00 | 0.875 | 2.589 | 99.87 | 0.816 | 2.545 | 99.73 | 0.772 | 2.862 | 98.79 | 0.646 |
| Ref. 3-4 | 0.00 | 3.753 | 100.00 | 0.764 | 3.497 | 100.00 | 0.495 | 27.610 | 99.02 | 0.296 | 34.110 | 99.84 | 0.212 |
| Ref. 3-5 | 0.00 | 5.327 | 100.00 | 0.477 | 78.510 | 99.46 | 0.098 | 89.800 | 100.00 | 0.071 | 16.660 | 100.00 | 0.057 |

### Physical stability

**Table 3-5**

| | | 0 min | | 3 min | | 6 min | | Particle diameter ratio 6 min/0min |
|---|---|---|---|---|---|---|---|---|
| | NaCl | D50 | 1.3*µ*m ↑ | D50 | 1.3 *µ* m ↑ | D50 | 1.3 *µ* m ↑ | |
| | [wt%] | [*µ*m] | [%] | [*µ*m] | [%] | [*µ*m] | [%] | [-] |
| Ex. 3-1 | 4.50 | 0.601 | 1.81 | 0.626 | 4.26 | 0.64 | 5.59 | 1.062 |
| Ex. 3-2 | 4.50 | 0.507 | 0.81 | 0.656 | 6.83 | 0.74 | 9.34 | 1.452 |
| Ex. 3-3 | 4.50 | 0.802 | 7.58 | 0.888 | 20.53 | 0.92 | 25.36 | 1.148 |
| Ref. 3-1 | 0.00 | 2.390 | 99.64 | 8.163 | 100.00 | 9.63 | 100.00 | 4.031 |
| Ref. 3-2 | 0.00 | 2.286 | 99.73 | 3.984 | 100.00 | 4.13 | 100.00 | 1.808 |
| Ref. 3-3 | 0.00 | 3.581 | 100.00 | 23.640 | 100.00 | 26.07 | 100.00 | 7.280 |

### Emulsifiability and storage stability

**Table 3-6**

| | Initial | Initial | | | 60°C 3 days | | | 60°C 1 week | | | 60°C 2 | weeks | |
|---|---|---|---|---|---|---|---|---|---|---|---|---|---|
| | NaCl | D50 | 1.3*µ*m ↑ | 0.1%E | 050 | 1.3*µ*m ↑ | 0.1%E | D50 | 1.3*µ* m ↑ | 0.1%E | D50 | 1.3*µ*m ↑ | 0.1%E |
| | [wt%] | [ *µ* m] | [%] | [-] | [*µ*m] | [%] | [-] | [*µ*m] | [%] | [-] | [µm] | [%] | [-] |
| Ex. 3-6 | 4.50 | 0.510 | 1.32 | 0.505 | 0.517 | 1.63 | 0.516 | 0.522 | 2.03 | 0.522 | 0.525 | 2.15 | 0.535 |
| Ex.3-7 | 4.50 | 0.657 | 3.35 | 0.677 | 0.666 | 4.06 | 0.698 | 0.668 | 4.39 | 0.702 | 0.675 | 5.30 | 0.714 |
| Ex. 3-8 | 4.50 | 0.991 | 23.17 | 0.965 | 1.016 | 26.48 | 0.993 | 1.038 | 29.32 | 1.004 | 1.071 | 33.20 | 1.012 |
| Ex. 3-9 | 4.50 | 1.746 | 86.32 | 1.221 | 1.833 | 88.52 | 1.231 | 1.952 | 90.37 | 1.231 | 2.286 | 94.62 | 1.251 |
| Ex. 3-10 | 4.50 | 2.720 | 99.81 | 1.245 | 3.197 | 99.75 | 1.130 | 3.365 | 99.20 | 0.973 | 5.797 | 98.98 | 0.754 |
| Ref. 3-6 | 0.00 | 0.817 | 7.87 | 0.829 | 1.052 | 38.59 | 0.911 | 1.317 | 52.27 | 0.945 | 1.636 | 62.10 | 0.957 |
| Ref. 3-7 | 0.00 | 1. 190 | 41.80 | 1.069 | 1. 626 | 71.28 | 1.123 | 1.706 | 73.89 | 1.150 | 1. 733 | 76.00 | 1.147 |
| Ref. 3-8 | 0.00 | 2.083 | 98.15 | 1.295 | 2.686 | 99.12 | 1.256 | 2.903 | 99.69 | 1.294 | 3.036 | 99.78 | 1.265 |
| Ref. 3-9 | 0.00 | 3.525 | 100.00 | 1.132 | 4.580 | 100.00 | 0.808 | 6.313 | 100.00 | 0.529 | 20.440 | 99.88 | 0.351 |
| Ref.3-10 | 0.00 | 5.650 | 100.00 | 0.595 | 62.170 | 100.00 | 0.130 | 74.460 | 100.00 | 0.079 | 88. 620 | 100.00 | 0.092 |

### Physical stability

**Table 3-7**

| | | 0 min | | 3 min | | 6 min | | Particle diameter ratio 6 min/0 min |
|---|---|---|---|---|---|---|---|---|
| | NaCl | D50 | 1.3*µ*m ↑ | D50 | 1. 3*µ*m ↑ | D50 | 1.3*µ*m ↑ | |
| | [wt%] | [*µ*m] | [%] | [*µ*m] | [%] | [*µ*m] | [%] | [-] |
| Ex. 3-6 | 4.50 | 0.518 | 2.29 | 0.609 | 16.61 | 0.600 | 12.94 | 1.158 |
| Ex. 3-7 | 4.50 | 0.665 | 4.86 | 0.828 | 28.22 | 0.881 | 31.65 | 1.325 |
| Ex.3-8 | 4.50 | 1.013 | 26.41 | 1.546 | 62.52 | 1.466 | 63.78 | 1.447 |
| Ref. 3-6 | 0.00 | 1.124 | 43.07 | 1.334 | 55.70 | 1.239 | 47.98 | 1.102 |
| Ref.3-7 | 0.00 | 1.572 | 70.29 | 2.168 | 98.27 | 2.078 | 99.24 | 1.322 |
| Ref.3-8 | 0.00 | 3. 379 | 99.90 | 4.916 | 100.00 | 4.099 | 100.00 | 1.213 |

### Emulsifiability and storage stability

**Table 3-8**

| | | | Initial | | 60°C 3 days | | | 60°C 1 week | | | 60°C 2 weeks | | |
|---|---|---|---|---|---|---|---|---|---|---|---|---|---|
| | NaCl | D50 | 1.3*µ* m ↑ | 01%E | D50 | 1.3µm ↑ | 0.1%E | D50 | 1.231 3*µ*m ↑ | 0.1%E | 050 | 1.3*µ*m ↑ | 0.1%E |
| | [wt%] | [*µ*m] | [%] | [-] | [µm] | [%] | [-] | [*µ*m] | [%] | [-] | [ *µ* m] | [%] | [-] |
| Ex. 3-11 | 4.50 | 0.506 | 12.46 | 0.477 | 0.59 | 22.37 | 0.534 | 0.632 | 25.28 | 0.557 | 0.684 | 27.85 | 0.582 |
| Ex. 3-12 | 4.50 | 0.481 | 8.78 | 0.468 | 0.50 | 9.94 | 0.490 | 0.507 | 9.93 | 0.500 | 0.518 | 10.95 | 0.509 |
| Ex. 3-13 | 4.50 | 0.571 | 0.82 | 0.566 | 0.58 | 0.87 | 0.569 | 0.579 | 0.96 | 0.581 | 0.584 | 0.98 | 0.588 |
| Ref. 3-11 | 0.00 | 1.612 | 66.31 | 0.924 | 9.20 | 100.00 | 0.587 | 8.490 | 100.00 | 0.582 | 8.525 | 100.00 | 0.645 |
| Ref. 3-12 | 0.00 | 0.650 | 13.71 | 0.649 | 1.15 | 45.56 | 0.788 | 1.236 | 48.99 | 0.812 | 1.337 | 53.00 | 0.856 |
| Ref 3-13 | 0.00 | 1.304 | 55.78 | 1.165 | 1.74 | 81.28 | 1.200 | 1.849 | 84.72 | 1.206 | 2.140 | 90.44 | 1.248 |

### Physical stability

**Table 3-9**

| | | 0 min | | 3 min | | 6 min | | Particle diameter ratio 6 min/0 min |
|---|---|---|---|---|---|---|---|---|
| | NaCl | D50 | 1.3*µ*m ↑ | D50 | 1.3*µ*m ↑ | D50 | 1.3*µ*m ↑ | |
| | [wt%] | [*µ*m] | [%] | [*µ*m] | [%] | [*µ*m] | [%] | [-] |
| Ex. 3-11 | 4.50 | 0.538 | 17.27 | 1.706 | 58.03 | 1.823 | 60.44 | 3.388 |
| Ex. 3-12 | 4.50 | 0.494 | 11.32 | 1.190 | 48.59 | 1.075 | 45.50 | 2.176 |
| Ex. 3-13 | 4.50 | 0.584 | 1.45 | 0.639 | 3.71 | 0.663 | 5. 63 | 1.135 |
| Ref. 3-11 | 0.00 | 4.761 | 100.00 | 3.242 | 99.88 | 3.043 | 99.82 | 0.639 |
| Ref. 3-12 | 0.00 | 1.133 | 46.44 | 2.069 | 75.53 | 1.724 | 66.87 | 1.522 |
| Ref. 3-13 | 0.00 | 1.628 | 80.40 | 2.110 | 98.45 | 2.045 | 98.47 | 1.256 |

### Production Example 4 (gum ghatti-containing preparations) (Salt variations)

### (4-1) GumG solution (Mw: 1.2 million, 25 mass% aqueous solution)

Emulsified preparations of Examples 4-1 to 4-5 (Ex. 4-1 to Ex. 4-5) were produced according to the formulations (GumG solutions (Mw: 1.2 million)) shown in the following table while changing the amount (concentration) of gum ghatti.

**Table 4-1**

| | Ex. 4-1 | Ex. 4-2 | Ex. 4-3 | Ex. 4-4 | Ex. 4-5 |
|---|---|---|---|---|---|
| | NaCl | KCI | MgCl₂ | CaCl₂ | Citric acid 3Na |
| MCT | 10.61 | 10.61 | 10.61 | 10.61 | 10.61 |
| SAIB | 9.39 | 9.39 | 9.39 | 9.39 | 9.39 |
| Ghatti solution | 16.00 | 16.00 | 8.00 | 4.00 | 2.00 |
| Salt | 4.50 | 5.75 | 2.93 | 3.42 | 3.97 |
| Citric acid (anhydrous) | 0.50 | 0.50 | 0.50 | 0.50 | 0.50 |
| Water | 23.57 | 22.94 | 31.36 | 34.62 | 36.09 |
| Glycerin | 35.43 | 34.81 | 37.21 | 37.46 | 37.44 |
| | 100.00 | 100.00 | 100.00 | 100.00 | 100.00 |

### (4-2) GumG solution (Mw: 150000, 28 mass% aqueous solution)

Similarly, preparations of the formulations shown in the following table (GumG solutions (Mw: 150000)) were produced (Examples 4-6 to 4-10 (Ex.4-6 to Ex.4-10)).

**Table 4-2**

| | Ex. 4-6 | Ex. 4-7 | Ex. 4-8 | Ex. 4-9 | Ex. 4-10 |
|---|---|---|---|---|---|
| | NaCl | KCI | MgCl2 | CaCl2 | Citric acid 3Na |
| Vitamin E | 0.20 | 0.20 | 0.20 | 0.20 | 0.20 |
| MCT | 15.02 | 15.02 | 15.02 | 15.02 | 15.02 |
| SAIB | 14.78 | 14.78 | 14.78 | 14.78 | 14.78 |
| Ghatti solution | 31.25 | 16.00 | 8.00 | 4.00 | 2.00 |
| Salt | 4.50 | 5.75 | 2.93 | 3.42 | 3.97 |
| Citric acid (anhydrous) | 0.50 | 0.50 | 0.50 | 0.50 | 0.50 |
| Water | 2.30 | 14.89 | 23.06 | 26.29 | 27.76 |
| Glycerin | 31.45 | 32.86 | 35.51 | 35.79 | 35.77 |
| | 100.00 | 100.00 | 100.00 | 100.00 | 100.00 |

### (4-3) β carotene-containing emulsified preparations

Similarly, β carotene-containing preparations were produced according to the formulations shown in the following two tables (first: GumG solutions (Mw: 1.2 million, 25 mass% aqueous solutions), second: GumG solutions (Mw: 150000, 28 mass% aqueous solutions)).

**Table 4-3**

| | Ex. 4-11 | Ref. 4-11 | Ex. 4-12 | Ref. 4-12 |
|---|---|---|---|---|
| β carotene | 4.36 | 4.36 | 2.91 | 2.91 |
| MCT | 6.05 | 6.05 | 7.50 | 7.50 |
| SAIB | 9.39 | 9.39 | 9.39 | 9.39 |
| Vitamin E | 0.20 | 0.20 | 0.20 | 0.20 |
| Ghatti solution | 20.00 | 20.00 | 20.00 | 20.00 |
| Refined salt | 4.50 | 0.00 | 4.50 | 0.00 |
| Citric acid (anhydrous) | 0.50 | 0.50 | 0.50 | 0.50 |
| Water | 18.60 | 20.76 | 18.60 | 20.76 |
| Glycerin | 36.40 | 38.74 | 36.40 | 38.74 |
| | 100.00 | 100.00 | 100.00 | 100.00 |

**Table 4-4**

| | Ex. 4-13 | Ref. 4-13 |
|---|---|---|
| β carotene | 4.36 | 4.36 |
| MCT | 10.58 | 10.58 |
| SAIB | 14.86 | 14.86 |
| Vitamin E | 0.20 | 0.20 |
| Ghatti solution | 18.00 | 18.00 |
| Salt | 4.50 | 0.00 |
| Citric acid (anhydrous) | 0.50 | 0.50 |
| Water | 15.82 | 17.98 |
| Glycerin | 31.18 | 33.52 |
| | 100.00 | 100.00 |

### Test Example 4 (gum ghatti-containing preparations) (Salt variations)

The various preparations produced in Production Example 4 were each tested for initial emulsifiability, storage stability, and physical stability according to the methods of Test Examples 1 and 2. The results are shown in each of the following tables.

### (4-1) Emulsifiability and storage stability

### (4-1-1) GumG solution (Mw: 1.2 million, 25 mass% aqueous solution)

**Table 4-5**

| | | | Initial | | | 60°C 3 days | | | 60°C 1 week | | | 60°C 2 weeks |
|---|---|---|---|---|---|---|---|---|---|---|---|---|
| | Salt type | Amount | D50 | 1.3µm ↑ | 0.1%E | D50 | 1.3µm ↑ | 0.1%E | DSO | 1.3*µ*m ↑ | 0.1%E | D50 |
| | | [wt%] | [µm] | [%] | [-] | [µm] | [%] | [-] | [µm] | [%] | [-] | [µm] |
| Ex. 4-1 | NaCl | 4.50 | 0.591 | 1. 66 | 0. 366 | 0.597 | 1.69 | 0.374 | 0.599 | 1.83 | 0.385 | 0. 602 |
| Ex. 4-2 | KCl | 5.75 | 0.564 | 1.43 | 0.349 | 0.572 | 147 | 0.354 | 0.576 | 1.231 | 0.364 | 0.577 |
| Ex. 4-3 | MgCl2 | 2.93 | 0.653 | 2.31 | 0.412 | 0.660 | 2.35 | 0.418 | 0.665 | 2.40 | 0.431 | 0.666 |
| Ex. 4-4 | CaCl2 | 3.42 | 0.661 | 2.50 | 0.415 | 0.668 | 2.60 | 0.421 | 0.673 | 2.68 | 0.437 | 0.679 |
| Ex. 4-5 | Citric acid 3Na | 3.97 | 0.857 | 10.88 | 0.532 | 0.870 | 11.47 | 0.533 | 0.875 | 11.69 | 0.549 | 0.879 |

### (4-1-2) GumG solution (Mw: 150000, 28 mass% aqueous solution)

**Table 4-6**

| | | | Initial | | | 60°C 3 days | | | 60°C 1 week | | | 60°C 2 weeks |
|---|---|---|---|---|---|---|---|---|---|---|---|---|
| | Salt type | Amount | D50 | 1.3*µ*m ↑ | 0.1%E | D50 | 1.3µm ↑ | 0.1%E | D50 | 1.3µm ↑ | 0.1%E | D50 |
| | | [wt%] | [µm] | [%] | [-] | [µm] | [%] | [-] | [µm] | [%] | [-] | [µm] |
| Ex. 4-6 | NaCl | 450 | 0.491 | 1.34 | 0.489 | 0.500 | 1.42 | 0.495 | 0.502 | 1.37 | 0.510 | 0.505 |
| Ex. 4-7 | KCl | 5.75 | 0.475 | 1.33 | 0.468 | 0.485 | 1.95 | 0.478 | 0.489 | 2.03 | 0.493 | 0.493 |
| Ex. 4-8 | MgCl2 | 2.93 | 0.497 | 0.82 | 0.500 | 0.508 | 1.48 | 0.506 | 0.511 | 1.48 | 0.524 | 0.515 |
| Ex. 4-9 | CaCl2 | 3.42 | 0.519 | 1.60 | 0.521 | 0.530 | 2.34 | 0.535 | 0.534 | 2.33 | 0.555 | 0.540 |
| Ex. 4-10 | Citric acid 3Na | 3.97 | 0.602 | 1.54 | 0.615 | 0.611 | 1.87 | 0.634 | 0.616 | 1.82 | 0.656 | 0.621 |

### (4-1-3) β carotene-containing emulsified preparations; GumG solution (Mw: 1.2 million, 25 mass% aqueous solution)

**Table 4-7**

| | NaCl | Initial | | | 60°C 3 days | | | 60°C 1 week | | | 60°C 2 weeks |
|---|---|---|---|---|---|---|---|---|---|---|---|
| | Amount | D50 | 1.3µm ↑ | 0.1%E | D50 | 1.3*µ*m ↑ | 0.1%E | D50 | 1.3µm ↑ | 0.1%E | D50 |
| | [wt%] | [µm] | [%] | [-] | [µm] | [%] | [-] | [µm] | [%] | [-] | [µm] |
| Ex. 4-11 | 4.50 | 0.422 | 0.16 | 0.419 | 0.439 | 0.15 | 0.433 | 0.442 | 0.15 | 0.436 | 0.441 |
| Ref. 4-11 | 0.00 | 1.380 | 63.02 | 1.047 | 1.408 | 66.04 | 1.079 | 1.413 | 66.53 | 1.076 | 1.421 |
| Ex. 4-12 | 4.50 | 0.462 | 0.18 | 0.396 | 0.485 | 0.55 | 0.414 | 0.489 | 0.56 | 0.417 | 0.491 |
| Ref.4-12 | 0.00 | 1.738 | 91.25 | 1.001 | 1.725 | 90.30 | 1.030 | 1.729 | 90.43 | 1.031 | 1.732 |

### (4-1-4) β carotene-containing emulsified preparations; GumG solution (Mw: 150000, 28 mass% aqueous solution)

**Table 4-8**

| | NaCl | Initial | | | 60°C 3 days | | | 60°C 1 week | | | 60°C 2 weeks |
|---|---|---|---|---|---|---|---|---|---|---|---|
| | Amount | D50 | 1.3*µ*m ↑ | 0.1%E | D50 | 1.3*µ*m ↑ | 0.1%E | D50 | 1.3µm ↑ | 0.1%E | D50 |
| | [wt%] | [µm] | [%] | [-] | [µm] | [%] | [-] | [µm] | [%] | [-] | [µm] |
| Ex. 4-13 | 450 | 0.512 | 2.40 | 0.721 | 0.525 | 2.38 | 0.736 | 0.525 | 2.46 | 0.741 | 0.527 |
| Ref. 4-13 | 0.00 | 0.881 | 18.20 | 1.179 | 0.940 | 23.77 | 1.205 | 0.935 | 23.76 | 1.206 | 0.938 |

As can be understood from the above, it was confirmed that the addition of various salts improved the emulsifiability, storage stability, and physical stability of the various emulsified preparations.

## Claims

1. An emulsion composition comprising:
water,
an oily component,
gum ghatti, and
a salt of an element belonging to group 1 or 2 of the periodic table.

2. The emulsion composition according to claim 1, wherein the oily component content is in the range of 0.1 to 50 mass%.

3. The emulsion composition according to claim 1 or 2, wherein the gum ghatti content is in the range of 0.1 to 40 mass%.

4. The emulsion composition according to any one of claims 1 to 3, wherein the gum ghatti content is in the range of 1 to 40000 parts by mass per 100 parts by mass of the oily component.

5. The emulsion composition according to any one of claims 1 to 4, wherein the salt is at least one member selected from the group consisting of sodium chloride, potassium chloride, calcium lactate, calcium chloride, and magnesium chloride.

6. The emulsion composition according to any one of claims 1 to 5, wherein the salt content is 0.01 parts by mass or more.

7. The emulsion composition according to any one of claims 1 to 6, further comprising a polyhydric alcohol.

8. The emulsion composition according to claim 7, wherein the polyhydric alcohol is at least one member selected from the group consisting of propylene glycol and glycerin.

9. The emulsion composition according to any one of claims 1 to 8, wherein the gum ghatti is low-molecular weight gum ghatti having a weight average molecular weight of 0.020 x 10⁶ to 1.10 x 10⁶.

10. A fine particle composition comprising:
an oily component,
gum ghatti, and
a salt of an element belonging to group 1 or 2 of the periodic table;
an internal phase containing the oily component being arranged in an external phase containing the gum ghatti and the salt of the element belonging to group 1 or 2 of the periodic table.

11. A method for producing the fine particle composition according to claim 10, the method comprising drying the emulsion composition according to any one of claims 1 to 9.

12. An emulsified flavoring preparation, emulsified colorant preparation, emulsified nutrition fortifier preparation, emulsified functional material preparation, or clouding agent comprising the emulsion composition according to any one of claims 1 to 9 or the fine particle composition according to claim 10.

13. A food or drink comprising the emulsion composition according to any one of claims 1 to 9 or the fine particle composition according to claim 10.

14. An aqueous composition comprising the emulsion composition according to any one of claims 1 to 9 or the fine particle composition according to claim 10.

15. A method for enhancing the opacity of a drink, the method comprising adding the emulsion composition according to any one of claims 1 to 9 or the fine particle composition according to claim 10 to the drink.

16. A method for improving the emulsion stability of an emulsion composition comprising water, an oily component, and gum ghatti, the method comprising adding a salt of an element belonging to group 1 or 2 of the periodic table to the composition.

17. The method according to claim 16, wherein the gum ghatti is low-molecular weight gum ghatti having a weight average molecular weight of 0.020 x 10⁶ to 1.10 x 10⁶.
